(19)

Europäisches Patentamt

European Patent Office

Office européen des brevets

(11) **EP 3 095 807 A1**

(12) **EUROPEAN PATENT APPLICATION**
published in accordance with Art. 153(4) EPC

(43) Date of publication:
**23.11.2016  Bulletin 2016/47**

(21) Application number: **15737092.5**

(22) Date of filing: **13.01.2015**

(51) Int Cl.:
*C08J 5/04* [(2006.01)]     *D04H 1/4242* [(2012.01)]

(86) International application number:
**PCT/JP2015/050607**

(87) International publication number:
**WO 2015/108021 (23.07.2015 Gazette 2015/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority:  **17.01.2014   JP 2014006938**

(71) Applicant: **Toray Industries, Inc.**
**Tokyo 103-8666 (JP)**

(72) Inventors:
• **MIYOSHI, Katsuhiro**
**Nagoya-shi**
**Aichi 455-8502 (JP)**

• **HASHIMOTO, Takafumi**
**Nagoya-shi**
**Aichi 455-8502 (JP)**
• **BAMBA, Kenta**
**Nagoya-shi**
**Aichi 455-8502 (JP)**
• **NARUSE, Yoshihiro**
**Nagoya-shi**
**Aichi 455-8502 (JP)**
• **TOKUNAGA, Takuro**
**Nagoya-shi**
**Aichi 455-8502 (JP)**

(74) Representative: **Hoefer & Partner Patentanwälte mbB**
**Pilgersheimer Straße 20**
**81543 München (DE)**

(54)  **STAMPABLE SHEET**

(57)  [Problem]
To provide a stampable sheet able to concomitantly achieve all of high mechanical characteristics and surface appearance after molding, particularly concealment of a molded plate surface bundle, and high fluidity during molding, which could not be achieved by means of stampable sheets comprising conventional carbon fiber non-woven sheets, and provided with conditions of an optimal range for exhibiting a particularly superior appearance in a surface texturing method, which is for transferring to the molded plate surface from a metal mold surface and is one surface processing method.
[Solution]
The stampable sheet comprising a skin layer and a core layer is characterized in that the core layer comprises a thermoplastic resin and a carbon fiber nonwoven sheet having fiber bundles of discontinuous carbon fibers, the carbon fiber nonwoven sheet contains at least five fiber bundles (A) having a bundle width of at least 150 $\mu$m in 100 mm$\times$ 100 mm of stampable sheet, and the skin layer comprises a thermoplastic resin and a strengthened fiber nonwoven sheet having opened discontinuous strengthened fibers.

[Fig 1]

[Fig 1]

EP 3 095 807 A1

# EP 3 095 807 A1

**Description**

TECHNICAL FIELD

The present invention relates to a stampable sheet comprising a carbon fiber composite material composed of carbon fibers and a thermoplastic resin, particularly a stampable sheet which has excellent concealment of fiber bundles standing out on the surface thereof and therefore has excellent surface appearance and which can exhibit both of high fluidity and mechanical properties when used for the production of a molded article.

BACKGROUND ART

A carbon fiber composite material composed of carbon fibers and a thermoplastic resin can provide high mechanical properties and therefore has been used in the production of various molded articles. Particularly when a stampable sheet comprising a carbon fiber composite material composed of carbon fibers and a thermoplastic resin is used for molding, the molding can proceed rapidly by a thermal press molding technique. Therefore, it is considered that such a stampable sheet is particularly suitable for the molding of mass-produced products.

The carbon fibers in the carbon fiber composite material can be in the form of a non-woven fabric. For example, Patent Document 1 proposes a carbon fiber non-woven fabric in which the proportion of specific carbon fiber bundles relative to the whole amount of fibers is decreased to a small level and the average number of fibers in specific carbon fiber bundles is kept within a specified range.

Patent Document 2, on the other hand, proposes a composite material in which the proportion of specific carbon fiber bundles relative to the whole amount of fibers in a carbon fiber non-woven fabric as mentioned above is kept within a specified range and the average number of fibers in the specific carbon fiber bundles is kept within a specified range to produce variations in the number of fibers in the bundles.

Patent Document 3 proposes a prepreg in which a reinforcing fiber base member is composed of 0 to 50% by weight of reinforcing fibers each having a fiber length of more than 10 mm, 50 to 100% by weight of reinforcing fibers each having a fiber length of 2 to 10 mm and 0 to 50% by weight of reinforcing fibers each having a fiber length of less than 2 mm, wherein the average value of two-dimensional orientation angles formed by single reinforcing fibers (a) and single reinforcing fibers (b) that intersects the single reinforcing fibers (a) is 10 to 80 degrees, the thickness of the prepreg is 0.03 to 1 mm at 23°C and the tensile strength $\sigma$ of the prepreg is 0.01 MPa or more.

PRIOR ART DOCUMENTS

PATENT DOCUMENTS

    Patent Document 1: Japanese Patent Laid-open Publication No. 2011-178890
    Patent Document 2: International Publication No. 2013/118689
    Patent Document 3: Japanese Patent Laid-open Publication No. 2010-235779

SUMMARY OF THE INVENTION

PROBLEMS TO BE SOLVED BY THE INVENTION

However, a carbon fiber non-woven fabric as disclosed in Patent Document 1, in which carbon fiber bundles are narrow, the proportion of bundles is small and carbon fibers are spread, is poor in fluidity during molding and therefore is poor in moldability, although the mechanical properties of a carbon fiber composite material molded article produced using the carbon fiber non-woven fabric are excellent. This is because, although the carbon fibers that serve as reinforcing fibers are dispersed sufficiently and therefore a stress is hardly concentrated and the reinforcing effect of the carbon fibers can be developed sufficiently, the carbon fibers are interlaced one another to restrict the movement thereof by one another and therefore the carbon fibers become difficult to move. With respect to the surface appearance of a molded article produced using the carbon fiber non-woven fabric, although there is a statement about smoothness, a phenomenon that bundles stand up on a surface layer cannot be avoided due to the existence of the bundles. In addition, because bundles exist in a small amount in spread fibers, the bundles appearing on the surface of a molded plate are seen more emphatically. Therefore, the surface appearance is undesirable.

A carbon fiber non-woven fabric as disclosed in Patent Document 2, in which carbon fiber bundles are localized in specific areas and the proportion of bundles is large, can exhibit excellent fluidity during the production of a carbon fiber composite material molded article using the carbon fiber non-woven fabric and can be molded into a product having excellent mechanical properties and having small variations in the mechanical properties. This is because carbon fiber bundles exist in specific areas with a certain distribution to reduce a phenomenon that a stress is concentrated into end parts of carbon fibers, and is also because the carbon fibers do not form a network structure and therefore can move easily. However, surface appearance is undesirable due to the existence of bundles.

In Patent Document 3, although mechanical properties and surface smoothness are excellent, fluidity during molding is poor and therefore moldability is also poor. This is because, although carbon fibers that serve as reinforcing fibers are dispersed and therefore a stress is hardly concentrated into specific areas and the reinforcing effect of the carbon fibers can be developed sufficiently, the carbon fibers are interlaced one another to restrict the movement thereof by one another and therefore the carbon fibers become difficult to move. In general, when carbon fibers are incorporated in a resin, the viscosity of the resin increases rapidly and therefore the resin cannot flow easily. Furthermore, with respect to surface appearance, it is described that a layer containing reinforcing fibers at a small volume fraction or a layer having short fiber lengths is provided for the purpose of improving appearance. In addition, a method is described in which different types of reinforcing fiber layers are used in combination, for example, in such a manner that a prepreg composed of carbon fibers and having a higher tensile elastic modulus is laminated on the further outer side and a prepreg composed of glass fibers or the like and having a lower tensile elastic modulus is laminated on the inner side, for the purpose of achieving both stiffness of a molded article and economic advantages. However, any one of the above-mentioned methods cannot satisfy all of requirements, i.e., moldability, mechanical properties and surface appearance, particularly the concealment of bundles appearing on the surface of a molded plate.

The present invention addresses the problem of providing a stampable sheet which can achieve all of high fluidity during molding, high mechanical properties and surface appearance after being molded, particularly the concealment of bundles appearing on the surface of a molded plate which cannot be achieved by the conventional carbon fiber non-woven fabric sheets, and can satisfy the optimal requirements for achieving an excellent appearance particularly in a surface texturing method which is one of surface treatment methods and in which a pattern is transferred from the surface of a mold onto the surface of a molded plate.

SOLUTIONS TO THE PROBLEMS

The means for solving the above-mentioned problem is as follows.

[1] A stampable sheet comprising a skin layer and a core layer, wherein the core layer comprises a carbon fiber non-woven fabric sheet having fiber bundles of discontinuous carbon fibers and a thermoplastic resin, the carbon fiber non-woven fabric sheet contains at least five or more fiber bundles (A) each having a bundle width of 150 $\mu$m or more per a 100 mm square of the stampable sheet and also contains less than five fiber bundles each having a bundle width of more than 5 mm per the above-mentioned 100 mm square, and the skin layer comprises a reinforcing fiber non-woven fabric sheet having spread discontinuous reinforcing fibers and a thermoplastic resin.

Particularly preferred embodiments in the present invention are as follows.

[2] The stampable sheet according to item [1], wherein the reinforcing fiber non-woven fabric sheet contains less than five fiber bundles each having a bundle width of 150 $\mu$m or more per a 100 mm square of the stampable sheet.

[3] The stampable sheet according to item [1] or [2], wherein the carbon fiber non-woven fabric sheet that constitutes the core layer contains fiber bundles (B) of the discontinuous carbon fibers in which the number $x_n$ of fibers calculated in accordance with the formula shown below is 100 or more, and the content of the fiber bundles (B) is more than 5 wt% relative to the total weight of carbon fibers that constitute the carbon fiber non-woven fabric sheet:

$$x_n = Mn/(Ln \times F)$$

wherein Mn represents the weight of a carbon fiber bundle, Ln represents the length of a carbon fiber bundle, and F represents the fineness of a carbon fiber.

[4] The stampable sheet according to any one of items [1] to [3], wherein, with respect to the single fiber bending stiffness of reinforcing fibers that constitute the skin layer and the single fiber bending stiffness of carbon fibers that constitute the core layer, the value of the (single fiber bending stiffness of the reinforcing fibers)/(single fiber bending stiffness of the carbon fibers) ratio is 1 or more and less than 20.

[5] The stampable sheet according to any one of items [1] to [4], wherein, with respect to the heat conductivity of the reinforcing fibers that constitute the skin layer and the heat conductivity of the carbon fibers that constitute the core layer, the value of the (heat conductivity of the reinforcing fibers)/(heat conductivity of the carbon fibers) ratio is more than 0.01 and 1 or less.

[6] The stampable sheet according to any one of items [1] to [5], wherein the value represented by formula (1) shown below is 0.1 or more and 10 or less:

```
(thickness (μm) of the skin layer)/(average bundle width (μm)

of the carbon fiber bundles (A) in the core layer) (1).
```

[7] The stampable sheet according to any one of items [1] to [6], wherein the reinforcing fibers in the skin layer have a number average fiber length of 3 to 50 mm.

[8] The stampable sheet according to any one of items [1] to [7], wherein the reinforcing fibers in the skin layer are glass fibers.

[9] The stampable sheet according to any one of items [1] to [8], wherein the skin layer contains a black inorganic filler.

[10] The stampable sheet according to any one of items [1] to [9], wherein the proportion of carbon fiber bundles (B) composed of 100 or more carbon fiber single fibers in the carbon fiber bundles that constitute the carbon fiber non-woven fabric sheet in the core layer is more than 20 wt% to 90 wt% with respect to the carbon fiber bundles that constitute the carbon fiber non-woven fabric sheet in the core layer.

[11] The stampable sheet according to item [10], wherein the average value x of the numbers of the fiber bundle-constituting fibers of the individual carbon fiber bundles (B) that constitute the carbon fiber non-woven fabric sheet in the core layer is 100 to 900.

[12] The stampable sheet according to item [10] or [11], wherein the standard deviation $\sigma$ of the numbers of the fiber bundle-constituting fibers of the individual carbon fiber bundles (B) falls within the range from 100 to 500.

[13] The stampable sheet according to any one of items [1] to [12], wherein the volume fraction (Vf) of the carbon fibers in the core layer is 5 to 50 vol%.

[14] The stampable sheet according to any one of items [1] to [13], wherein the number average fiber length of the carbon fibers in the carbon fiber non-woven fabric sheet that constitutes the core layer is 3 to 25 mm.

[15] A molded article produced using a stampable sheet as recited in any one of items [1] to [14].

EFFECTS OF THE INVENTION

According to the stampable sheet of the present invention, it is possible to provide an excellent stampable sheet which can achieve all of excellent fluidity during molding, high mechanical properties and surface appearance of a molded product of the stampable sheet, particularly the concealment of bundles appearing on the surface of a molded plate, having small variations in the mechanical properties, and can achieve excellent appearance particularly in a surface texturing method which is one of surface treatment methods and in which a pattern is transferred from the surface of a mold onto the surface of a molded plate.

BRIEF DESCRIPTION OF THE DRAWINGS

Fig. 1 shows one embodiment of a carding device used in the present invention.
Fig. 2 shows one embodiment of an air-laying device used in the present invention.
Fig. 3 shows one embodiment of a paper-making device used in the present invention.
Fig. 4 shows a schematic view illustrating the definition of a bundle width of a fiber bundle present in each of a carbon fiber non-woven fabric sheet and a reinforcing fiber non-woven fabric sheet used in the present invention.

EMBODIMENTS OF THE INVENTION

At first, embodiments of the present invention and particularly preferred embodiment of the present invention are described.

The stampable sheet according to the present invention is characterized by comprising a skin layer and a core layer, wherein the core layer comprises a carbon fiber non-woven fabric sheet having fiber bundles of discontinuous carbon fibers and a thermoplastic resin, the carbon fiber non-woven fabric sheet contains at least five or more fiber bundles (A) each having a bundle width of 150 $\mu$m or more per a 100 mm square of the stampable sheet, and the skin layer comprises a reinforcing fiber non-woven fabric sheet having spread discontinuous reinforcing fibers and a thermoplastic resin.

The stampable sheet according to the present invention is invented on the basis of the below-mentioned technical findings found by the present inventors. That is, in a stampable sheet comprising a skin layer and a core layer, when a carbon fiber non-woven fabric sheet is incorporated in a matrix composed of a thermoplastic resin in the core layer, the fluidity of the resultant composite material is generally deteriorated during the molding of the composite material. However, the deterioration of the fluidity can be prevented by increasing the amount of carbon fiber bundles that are in the form of bundles of carbon fibers, and therefore good fluidity can be achieved. If the proportion of the carbon fiber bundles is too much, although good fluidity can be achieved, high mechanical properties of a molded product of the composite material are hardly achieved. Furthermore, the good fluidity-focused optimal range of the form of the carbon fiber bundles and the high mechanical properties-focused optimal range of the form of the carbon fiber bundles are not always the same as each other. The present inventors take all of the above-mentioned findings into consideration, and have found the constitution of a core layer in which particularly a good balance between good fluidity and high mechanical properties can be achieved. As a result, the present invention involving the core layer has been accomplished.

In the present invention, the number of fiber bundles each having a bundle width of 150 $\mu$m or more per a 100 mm square of the core layer in the stampable sheet is preferably 5 or more, more preferably 10 or more, still more preferably 20 or more. The upper limit of the number of the fiber bundles each having a bundle width of 150 $\mu$m or more is not particularly limited. From the viewpoint of the fluidity of the stampable sheet, the number is preferably 150000/t (mm) or less wherein t (mm) is the thickness of a 100 mm $\times$ 100 mm specimen of the stampable sheet on which the bundle width is to be measured.

For achieving more satisfactory fluidity, the number of fiber bundles each having a bundle width of 500 $\mu$m or more is preferably 5 or more, more preferably 10 or more, still more preferably 20 or more. The upper limit of the number of the fiber bundles each having a bundle width of 500 $\mu$m or more is not particularly limited. From the viewpoint of the fluidity of the stampable sheet, the number is preferably 60000/t (mm) or less wherein t (mm) is the thickness of a 100 mm $\times$ 100 mm specimen of the stampable sheet on which the bundle width is to be measured.

The number of fiber bundles each having a bundle width of more than 5 mm per the above-mentioned 100 mm square is preferably less than 5, more preferably less than 3, still more preferably 0.

It is more preferred that the number of fiber bundles each having a bundle width of more than 3 mm per the above-mentioned 100 mm square is less than 5. If fiber bundles each having a bundle width of more than 5 mm are present in a large amount, the diameters of the carbon fiber bundles become larger and therefore the penetration of a resin into the bundles becomes poor, and therefore a stress tends to be concentrated into end parts of the carbon fibers. The lower limit of the number of fiber bundles each having a bundle width of more than 3 mm is not particularly limited, and the substantial lower limit is 0.

In the case where the composite material is formed only from a core layer, if carbon fiber bundles each having a bundle width larger than a specific value exist in a dispersed state in the composite material, a phenomenon that the carbon fiber bundles stand up on the surface during the molding of a molded plate cannot be avoided. As the result, a portion of the surface on which the bundles stand up hardly become smooth, and carbon fiber bundles each having a bundle width larger than a specific value are scattered in spread carbon fibers. Therefore, the carbon fiber bundles become noticeable when the surface of the molded plate is observed with naked eyes, resulted in the deterioration of surface appearance. When a non-woven fabric composed of discontinuous reinforcing fibers is placed in a skin layer, the carbon fiber bundles in the core layer can be concealed, and the influence of the unevenness of the surface can be eliminated. With taking these facts and others into consideration, the structure of the skin layer is optimized in such a manner that particularly the concealment of bundles present in the core layer, good fluidity required for a stampable sheet and high mechanical properties can be achieved with a good balance.

Furthermore, in the stampable sheet according to the present invention, it is also preferred that the single fiber bending stiffness of the reinforcing fibers that constitute the skin layer in the stampable sheet is equal to or larger than that of the carbon fibers that constitute the core layer in the stampable sheet.

When the stampable sheet has the above-mentioned constitution, the bending stiffness of the reinforcing fiber non-woven fabric in the skin layer becomes stronger than that of the carbon fiber non-woven fabric in the core layer, because the single fiber bending stiffness of the reinforcing fibers in the skin layer is equal to or larger than that of the carbon fibers in the core layer. Therefore, the skin layer can reduce the influence of the unevenness of the core layer during molding. The value of the (single fiber bending stiffness of the reinforcing fibers)/(single fiber bending stiffness of the carbon fibers) ratio is preferably 1 or more and less than 20, more preferably 5 or more and less than 10. If the value is less than 1, the surface appearance of a molded plate is sometimes deteriorated. If the value is more than 20, the single fiber diameter becomes large and therefore the surface appearance of a molded plate is sometimes deteriorated.

In order to achieve higher surface appearance, particularly extremely superior appearance in a surface processing method such as a surface texturing method which is one of surface treatment methods and in which a pattern is transferred from the surface of a mold onto the surface of a molded plate, it is preferred that the heat conductivity of the reinforcing fibers that constitute the skin layer is equal to or lower than that of the carbon fibers that constitute the core layer.

When the stampable sheet has the above-mentioned constitution, it is possible to decrease the cooling speeds for the skin layer and the core layer during molding, particularly stamping molding, and therefore the followability to a molding mold and the pattern transfer properties in a surface texturing process or the like can be improved. The value of the (heat conductivity of the reinforcing fibers)/(heat conductivity of the carbon fibers) ratio is preferably more than 0.01 and 1 or less, more preferably 0.05 to 1 inclusive. If the value is less than 0.01, the time required for preheating in the molding is prolonged, which sometimes leads to the resin degradation of the thermoplastic resin. If the value is more than 1, the moldability is sometimes deteriorated.

In order to achieve all of higher fluidity, mechanical properties and surface appearance, it is preferred that the value obtained in accordance with formula (1) shown below is 0.1 to 10 inclusive. If the value is less than 0.1, the thickness of the skin layer is too thin relative to the carbon fiber bundle width in the core layer and therefore the surface appearance sometimes becomes poor. If the value is equal to or more than 10, the mechanical properties of the stampable sheet are sometimes deteriorated.

```
(thickness of the skin layer (μm))/(average bundle width of the

carbon fiber bundles (A) in the core layer (μm)) (1)
```

Furthermore, in order to achieve the concealment of the bundles reliably, it is preferred that the number average fiber length (also sometimes referred to as "a fiber length", hereinbelow) of the reinforcing fibers in the skin layer is 3 to 50 mm.

In order to achieve the concealment of the bundles more reliably, it is preferred that the reinforcing fibers in the skin layer are glass fibers.

In order to achieve the concealment of the carbon fiber bundles still more reliably, it is preferred that the skin layer contains a black inorganic filler. When the skin layer contains a black inorganic filler, the black inorganic filler is precipitated on the surface of the skin layer during molding, and therefore concealment of the carbon fiber bundles in the core layer can be enhanced and the surface of the stampable sheet can have a uniform black color, resulted in good surface color of the stampable sheet. It is preferred that the surface of the stampable sheet has such a color that the L value is preferably 29 or less, more preferably 27 or less, still more preferably 24 or less. If the L value is more than 29, the surface looks whity and therefore the surface of the stampable sheet sometimes looks hazy. The lower limit of the L value is not particularly limited, and 0 is the substantial lower limit.

The reinforcing fiber non-woven fabric sheet that constitutes the skin layer has spread discontinuous reinforcing fibers. The term "spread" in the wording "a reinforcing fiber non-woven fabric sheet having spread discontinuous reinforcing fibers" as used herein refers to such a state that the discontinuous reinforcing fibers are dispersed substantially in the form of single fibers. Specifically, it is preferred that the reinforcing fiber non-woven fabric sheet contains at least fiber bundles each having a bundle width of 150 μm or more in an amount of less than 5 per a 100 mm square of the stampable sheet.

Basically, a state in which spread discontinuous reinforcing fibers are dispersed is ideal. When fiber bundles each having a bundle width of 150 μm or more are contained, it is preferred when the number of the fiber bundles is smaller. If the number of the fiber bundles contained per a 100 mm square of the stampable sheet is 5 or more, decorative characteristics capable of concealing the unevenness of the surface of a molded plate cannot be sometimes secured as mentioned above. The lower limit of the number of the fiber bundles each having a bundle width of 150 μm or more is not particularly limited, and 0 is the substantial lower limit.

As mentioned above, there is a tendency that the fluidity of the stampable sheet is deteriorated when the compounding amount of the carbon fiber bundles that constitute the carbon fiber non-woven fabric sheet in the core layer is small.

Therefore, it is preferred that the proportion of carbon fiber bundles (B) composed of 100 or more carbon fiber single fibers in the carbon fiber bundles that constitute the carbon fiber non-woven fabric sheet is more than 5 wt%.

In other words, in the present invention, it is preferred that the carbon fiber non-woven fabric sheet that constitutes the core layer contains fiber bundles (B) of the discontinuous carbon fibers in which the number $x_n$ of fibers calculated in accordance with the formula shown below is 100 or more, and the content of the fiber bundles (B) is 20 to 90 wt% relative to the total weight of carbon fibers that constitute the carbon fiber non-woven fabric sheet:

$$x_n = Mn/(Ln \times F)$$

wherein Mn represents the weight of a carbon fiber bundle, Ln represents the length of a carbon fiber bundle, and F represents the fineness of a carbon fiber.

The proportion (content) of the carbon fiber bundles (B) is preferably more than 5 wt%, more preferably 20 wt% or more, still more preferably 30 wt% or more, further preferably 35 wt% or more, particularly preferably 37 wt% or more. The proportion (content) is preferably 90 wt% or less, more preferably 80 wt% or less, still more preferably 70 wt% or less, particularly preferably 40 wt% or less. When the carbon fiber bundles (B) are contained in an amount of more than 5 wt%, the stampable sheet can flow easily. When the carbon fiber bundles (B) are contained in an amount of 20 wt% or more, the stampable sheet can exhibit higher fluidity. However, if the content of the carbon fiber bundles (B) is more than 90 wt%, the mechanical properties of the stampable sheet are sometimes deteriorated.

In order to achieve both high fluidity and mechanical properties of the stampable sheet more reliably, the average single fiber number of the carbon fiber bundles (B) that constitute the carbon fiber non-woven fabric sheet in the core layer (i.e., the average value x of the number of the fiber bundle-constituting fibers of the carbon fiber bundles (B)) is preferably 100 to 900, more preferably 200 to 800, still more preferably 300 to 650. If the carbon fiber bundles (B) are not present or the average single fiber number is less than 100, the fluidity is sometimes deteriorated. If the average single fiber number is more than 900, the carbon fiber bundles become thick, and therefore the penetration of a resin into the fiber bundles becomes poor and a stress tends to be concentrated into end parts of the carbon fibers, sometimes resulted in the deterioration of mechanical properties.

In order to achieve both high fluidity and mechanical properties of the stampable sheet still more reliably, the standard deviation σ of the average number of bundle-constituting single carbon fibers that constitute the carbon fiber bundles (B) (i.e., the standard deviation σ of the numbers of fiber bundle-constituting fibers in the individual carbon fiber bundles (B)) is preferably falls within the range from 100 to 500, more preferably from 100 to 400, still more preferably from 100 to 350. For the production of a carbon fiber non-woven fabric sheet in which the standard deviation σ is less than 100, it is required to control the fiber spreading precisely. In this case, the productivity of the sheet is sometimes decreased. If the standard deviation σ is more than 500, the variations of mechanical properties of a stampable sheet produced from the carbon fiber bundles (B) are sometimes increased.

Furthermore, it is preferred that the Vf (volume fraction) of the carbon fibers in the core layer is 5 to 50 vol%. The Vf is more preferably 10 to 40 vol%. If the Vf is less than 5 vol%, mechanical properties are sometimes deteriorated. If the Vf is more than 50 vol%, fluidity is sometimes deteriorated.

In order to achieve both high fluidity and mechanical properties of the stampable sheet reliably, it is preferred that the number average fiber length of the carbon fibers in the carbon fiber non-woven fabric sheet that constitutes the core layer (wherein the number average fiber length is also referred to as a "fiber length", hereinbelow) is 3 to 25 mm.

Next, preferred embodiments in the present invention, the method for producing the stampable sheet according to the present invention, a molded article produced using the stampable sheet and so on will be described.

At first, in the stampable sheet according to the present invention, the stampable sheet comprises a core layer and a skin layer. The core layer comprises a carbon fiber non-woven fabric sheet having discontinuous carbon fibers and a resin (a matrix resin), and the skin layer comprises a reinforcing fiber non-woven fabric sheet having spread discontinuous reinforcing fibers and a thermoplastic resin.

In this regard, the carbon fibers to be used for producing the carbon fiber non-woven fabric sheet in the present invention are not particularly limited. As the carbon fibers, carbon fibers having high strength and a high elastic modulus can be used. A single type of the carbon fibers may be used, or a combination of two more types of the carbon fibers may be used. Particularly, carbon fibers of a PAN-type, a pitch-type, a rayon-type and the like can be mentioned. From the viewpoint of the balance between the strength and an elastic modulus of a resultant molded article, carbon fibers of a PAN-type are preferred. The density of the carbon fibers is preferably 1. 65 to 1.95 g/cm$^3$, more preferably 1.70 to 1.85 g/cm$^3$. When carbon fibers having a too high density are used, the lightweight performance of the resultant stampable sheet sometimes becomes poor. When carbon fibers having a too low density are used, the mechanical properties of the resultant stampable sheet are sometimes deteriorated.

From the viewpoint of the productivity, the carbon fibers to be used for producing the carbon fiber non-woven fabric sheet according to the present invention are preferably carbon fiber bundles produced by unspreading single fibers, wherein the number of the single fibers in the carbon fiber bundles is preferably large. The number of the single fibers in the carbon fiber bundles can be in the range from 1,000 to 100,000, particularly from 10,000 to 70,000. The carbon fiber bundles are required to meet the below-mentioned requirements defined in the present invention. The single fiber bending stiffness of the carbon fibers is preferably in the range from $1.0 \times 10^{-11}$ to $3.5 \times 10^{-11}$ Pa•m$^4$, more preferably $2.0 \times 10^{-11}$ to $3.0 \times 10^{-11}$ Pa•m$^4$. When the single fiber bending stiffness falls within the above-mentioned range, it becomes possible to stabilize the quality of the resultant carbon fiber non-woven fabric sheet in the below-mentioned carbon fiber non-woven fabric sheet production process.

For the purpose of improving the bonding of the carbon fiber bundles to be used for producing the carbon fiber non-woven fabric sheet to the matrix resin, it is preferred that the surfaces of the carbon fiber bundles are treated. Examples of the method for treating the surfaces include an electrolytic treatment, a treatment with ozone, and a treatment with ultraviolet ray. For the purpose of preventing the fluffing of the carbon fiber bundles, improving the unspreadability of the carbon fiber bundles, improving the bonding of the carbon fiber bundles to the matrix resin and so on, a sizing agent may be applied to the carbon fibers. The sizing agent is not particularly limited, and a compound having a functional group such as an epoxy group, a urethane group, an amino group and a carboxyl group can be used. These compounds may be used singly, or in a combination of two or more.

The sizing treatment is a treatment method in which water-wetted carbon fiber bundles that are wetted with water through a surface treatment process, a water washing process and the like and have a water content of about 20 to 80% by weight are dried and subsequently a solution containing a sizing agent (a sizing solution) is adhered onto the dried carbon fiber bundles.

The means for applying the sizing agent is not particularly limited. For example, a method in which the carbon fiber bundles are immersed in a sizing solution with a roller, a method in which the carbon fiber bundles are brought into contact with a roller having a sizing solution adhered thereto, and a method in which a sizing solution is applied in the form of mists onto the carbon fiber bundles can be mentioned. The method may be in a batch mode or a continuous mode. A continuous mode is preferred, because good productivity can be achieved and the variations can be minimized. In this regard, it is preferred to control the concentration and temperature of the sizing solution, the fiber tension and the like so that the amount of an active ingredient of the sizing agent adhered onto the carbon fiber bundles can become uniform within a proper range. It is more preferred to vibrate the carbon fiber bundles with ultrasonic waves during the application of the sizing agent.

The drying temperature and the drying time can be adjusted by controlling the amount of the compound applied. From the viewpoint of the reduction in the time required for the complete removal and drying of a solvent to be used in the application of the sizing agent, the prevention of the sizing agent from being thermally degraded, and the prevention of the carbon fiber bundles from getting hard to worsen the spreading of the bundles, the drying temperature is preferably 150 to 350°C inclusive, more preferably 180 to 250°C inclusive.

The amount of the sizing agent to be adhered is preferably 0.01 to 10% by mass inclusive, more preferably 0.05 to 5% by mass inclusive, still more preferably 0.1 to 5% by mass inclusive, relative to the mass of only the carbon fiber bundles. If the amount is 0.01% by mass or less, the bonding-improving effect is hardly achieved. If the amount is 10% by mass or more, the physical properties of the molded article are sometimes deteriorated.

In the present invention, a thermoplastic resin is used as the matrix resin to be used in the core layer. The material for the thermoplastic matrix resin is not particularly limited, and can be selected appropriately as long as the mechanical properties of the molded article are not deteriorated greatly. Examples of the thermoplastic matrix resin include: a polyolefin resin, such as a polyethylene resin and a polypropylene resin; a polyamide resin, such as a nylon 6 resin and a nylon 6, 6 resin; a polyester resin, such as a polyethylene terephthalate resin and a polybutylene terephthalate resin; and a resin, such as a polyphenylene sulfide resin, a polyether ketone resin, a polyethersulfone resin and an aromatic polyamide resin. Among these resins, any one of a polyamide resin, a polypropylene resin and a polyphenylene sulfide resin is preferred.

The matrix resin to be used in the present invention may additionally contain: a filler such as mica, talc, kaolin, hydrotalcite, sericite, bentonite, xonotlite, sepiolite, smectite, montmorillonite, wollastonite, silica, calcium carbonate, glass beads, glass flakes, glass microbaloons, clay, molybdenum disulfide, titanium oxide, zinc oxide, antimony oxide, calcium polyphosphate, graphite, barium sulfate, magnesium sulfate, zinc borate, calcium borate, aluminum borate whisker, titanic acid potassium whisker and a polymeric compound; an electrical conductivity-imparting material such as a metal-type electrical conductivity-imparting material, a metal oxide-type electrical conductivity-imparting material, carbon black and graphite powder; a halogen-containing flame retardant agent such as a brominated resin, an antimony-containing flame retardant agent such as antimony trioxide and antimony pentaoxide, a phosphorus-containing flame retardant agent such as ammonium polyphosphate, an aromatic phosphate and red phosphorus, an organic acid metal salt-type flame retardant agent such as an organic boric acid metal salt, a carboxylic acid metal salt and an aromatic sulfoneimide metal salt, an inorganic flame retardant agent such as zinc borate, zinc, zinc oxide and a zirconium compound, a nitrogen-containing flame retardant agent such as cyanuric acid, isocyanuric acid, melamine, melamine cyanurate, melamine phosphate and nitrogenated guanidine, a fluorine-containing flame retardant agent such as PTFE, a silicone-containing flame retardant agent such as polyorganosiloxane, a metal hydroxide-type flame retardant agent such as aluminum hydroxide and magnesium hydroxide, or other flame retardant agent; a flame retardant aid such as cadmium oxide, zinc oxide, copper (I) oxide, copper (II) oxide, iron (I) oxide, iron (II) oxide, cobalt oxide, manganese oxide, molybdenum oxide, tin oxide and titanium oxide; a pigment; a dye; a lubricant agent; a mold release agent; a compatibilizing agent; a dispersant; a crystal nucleating agent such as mica, talc and kaolin; a plasticizer such as a phosphoric acid ester; a thermal stabilizer; an antioxidant agent; a coloration-preventing agent; an ultraviolet ray absorber; a fluidity modifier; a foaming agent, an antibacterial agent; a vibration damping agent; a deodorizer; a sliding property modifier; an antistatic agent such as a polyether ester amide; and others, depending on the intended use thereof, as long as the purposes of the present invention can be achieved.

As the process of producing the carbon fiber non-woven fabric sheet, carding, air-laying and the like can be mentioned. "Carding" refers to a process of applying a force to an assembly of discontinuous fiber bundles in approximately the same direction with a comb-like tool to align the directions of the discontinuous fibers or spread the fibers. The carding is generally carried out using a carding device equipped with a roll having many needle-like protrusions on the surface thereof and/or a roll having saw-edged protrusions on the surface thereof and having a metallic wire wound on the surface thereof.

In the practice of the carding, it is preferred to shorten the time for which the carbon fiber bundles exist in a carding device (a retention time), for the purpose of preventing the breakage of the carbon fiber bundles. Specifically, it is preferred to transfer the carbon fiber bundles present on a wire wound around a cylinder roll in a carding device to a doffer roll within a short time as possible. In order to promote the aforementioned transfer, it is preferred to rotate the cylinder roll at a number of revolutions of as high as 100 rpm or more, for example. For the same reason, the surface speed of the doffer roll is preferably as high as 10 m/min or more.

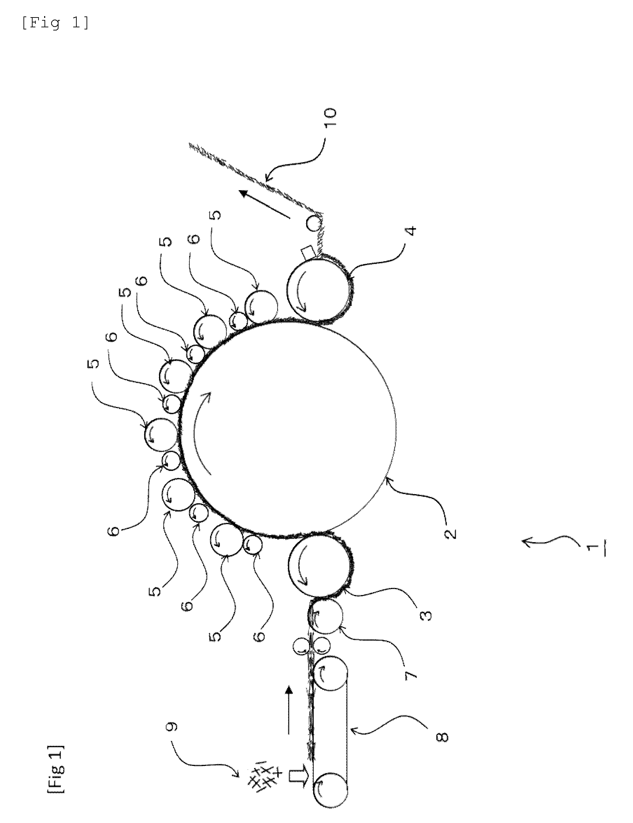

The process of carding the carbon fiber bundles is not particularly limited, and a generally employed process can be employed. For example, as shown in Fig. 1, a carding device 1 is mainly composed of: a cylinder roll 2; a take-in roll 3 which is arranged on an upstream side adjacent to the outer peripheral surface of the cylinder roll 2; a doffer roll 4 which is arranged adjacent to the outer peripheral surface of the cylinder roll 2 on an downstream side opposed to the take-in roll 3; multiple worker rolls 5 which are arranged adjacent to the outer peripheral surface of the cylinder roll 2, between the take-in roll 3 and the doffer roll 4; a stripper roll 6 which is arranged adjacent to the worker rolls 5; and a feed roll 7 and a belt conveyor 8 which are arranged adjacent to the take-in roll 3.

Discontinuous carbon fibers 9 are supplied to the belt conveyor 8, and the carbon fibers 9 are introduced onto the outer peripheral surface of the feed roll, then onto the outer peripheral surface of the take-in roll 3 and then onto the outer peripheral surface of the cylinder roll 2. Up to this process, the carbon fiber bundles are disentangled to form an assembly of cotton-like carbon fiber bundles. A portion of the assembly of the cotton-like carbon fiber bundles supplied to the outer peripheral surface of the cylinder roll 2 is wound around the outer peripheral surface of the worker roll 5. The cotton-like carbon fiber bundles are detached by means of the stripper roll 6, and are returned onto the outer peripheral surface of the cylinder roll 2 again. On the outer peripheral surface of each of the feed roll 7, the take-in roll 3, the cylinder roll 2, the worker roll 5 and the stripper roll 6, there are many needles or protrusions in a raising state. In the above-mentioned process, the carbon fiber bundles are spread into carbon fiber bundles each composed of a specified number of single fibers and are aligned to some extent by the action of the needles. The carbon fiber bundles are spread into the specific carbon fiber bundles through this process, and are transferred in the form of a sheet-like web 10, which is one embodiment of the carbon fiber non-woven fabric sheet, onto the outer peripheral surface of the doffer roll 4.

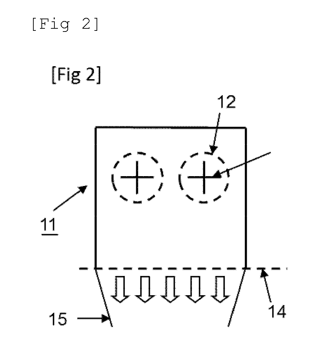

The air-laying is not particularly limited, either, and a conventional air-laying method can be employed. Examples of the conventional air-laying method include a Honshu Paper method, a Kroyer method, a Dan Web method, a J & J method, a KC method and a Scott method. Specifically, a process can be mentioned, in which cut carbon fiber bundles alone or both of cut carbon fiber bundles and thermoplastic resin fibers or thermoplastic resin particles are charged in a tube, and then compressed air is blown onto the fiber bundles to spread, diffuse and fix the fiber bundles, thereby producing the carbon fiber non-woven fabric. A process can also be mentioned, in which an air-laying device 11 as illustrated in Fig. 2 is used. In this process, the air-laying device 11 is equipped with drums 12 which are cylindrical, have pores formed therein and can revolve in opposite directions and pin cylinders 13 which are respectively arranged in the drum 12. Carbon fiber bundles alone or carbon fiber bundles and thermoplastic resin fibers or thermoplastic resin particles are air-feed together with a large volume of air into the drums 12 to spread the carbon fiber bundles by means of the pin cylinders 13 in the drums 12. The spread product is discharged through the pores to fall down onto a wire 14 that runs beneath the drums 12. The air used for the air-feeding is sucked into a suction box 15 that is placed beneath the wire 14, and only the spread carbon fiber bundles alone or the spread carbon fiber bundles and the thermoplastic resin fibers or the thermoplastic resin particles remain on the wire 14, thereby producing the carbon fiber non-woven fabric sheet.

The term "carbon fiber non-woven fabric sheet" as used herein refers to one which retains the shape thereof by the action of the interlacing of fibers or the friction between the fibers while spreading and orienting the discontinuous carbon fiber bundles by the above-mentioned carding or air-laying. Examples of the carbon fiber non-woven fabric sheet include: a thin sheet-like web; and a non-woven fabric produced by laminating webs and optionally interlacing the webs or bonding the webs together.

The carbon fiber non-woven fabric sheet may be composed of only carbon fibers, and may additionally contain thermoplastic resin fibers and thermoplastic resin particles. The addition of thermoplastic resin fibers or thermoplastic resin particles is preferred, because the breakage of bundles and single fibers of the carbon fibers can be prevented in the carding or air-laying process. Carbon fibers are normally rigid and fragile, and therefore hardly interlace each other and are easily broken. Therefore, a carbon fiber non-woven fabric sheet composed of only carbon fibers has a problem that the sheet is easily cut during production, and the carbon fibers fall out easily. Then, thermoplastic resin fibers that are flexible, are hardly broken and can interlace each other easily are added to produce a carbon fiber non-woven fabric sheet having high uniformity.

In the present invention, when thermoplastic resin fibers or thermoplastic resin particles are contained in the carbon fiber non-woven fabric sheet, the content of the carbon fibers in the carbon fiber non-woven fabric sheet is preferably 20 to 95% by mass, more preferably 50 to 95% by mass, still more preferably 70 to 95% by mass. If the content of the carbon fibers is low, it is impossible to achieve high mechanical properties of a carbon fiber composite material produced using the carbon fibers. If the content of the thermoplastic resin fibers or thermoplastic resin particles is too low, it is impossible to achieve the effect of improving the uniformity of the carbon fiber non-woven fabric sheet.

In the present invention, when thermoplastic resin fibers or thermoplastic resin particles are contained in the carbon fiber non-woven fabric sheet, the fiber lengths of the thermoplastic resin fibers are not particularly limited, as long as the purposes of the present invention, i.e., the retention of the shape of the carbon fiber non-woven fabric sheet and the prevention of the fall out of the carbon fibers, can be achieved. Generally, thermoplastic resin fibers each having a fiber length of about 10 to 100 mm can be used. The fiber lengths of the thermoplastic resin fibers may be determined in a relative manner depending on the fiber lengths of the carbon fiber bundles. For example, when the carbon fiber non-woven fabric sheet is stretched, a larger tension is applied to longer fibers. Therefore, the fiber lengths of the carbon fiber bundles may be longer than those of the thermoplastic resin fibers when it is intended to apply a tension to the carbon fiber bundles to orient the carbon fiber bundles in the direction of the length of the carbon fiber non-woven fabric sheet, and the fiber lengths of the carbon fiber bundles may be shorter than those of the thermoplastic resin fibers in the reverse case.

It is preferred to crimp the thermoplastic resin fibers for the purpose of enhancing the effect of interlacing between the thermoplastic resin fibers. The degree of crimping is not particularly limited, as long as the purposes of the present invention can be achieved. Generally, thermoplastic resin fibers having a number of crimps of about 5 to 25 crimps/25 mm and a percentage of crimp of about 3 to 30% can be used.

The particle diameter of each of the thermoplastic resin particles is not particularly limited, as long as the purpose of the present invention, i.e., the retention of the shape of the carbon fiber non-woven fabric sheet and the prevention of the fall out of carbon fiber bundles and single fibers, can be achieved. Generally, thermoplastic resin particles each having a particle diameter of about 10 to 500 $\mu$m can be used. A particle diameter of less than 10 $\mu$m is not preferred, from the viewpoint of handling properties and economic performance. If the particle diameter is more than 500 $\mu$m, it is likely that the carbon fiber bundles in the carbon fiber non-woven fabric sheet rise in the thickness orientation or the fibers are bent. Therefore, the particle diameter is not preferred, from the viewpoint of mechanical properties.

From the viewpoint of the uniformity and handling properties of the resultant carbon fiber non-woven fabric, the thermoplastic resin fibers and the thermoplastic resin particles may be used in combination.

The material for the thermoplastic resin fibers or the thermoplastic resin particles is not particularly limited, and can be selected appropriately as long as the mechanical properties of the carbon fiber composite material cannot be greatly deteriorated. For example, fiber produced by spinning a resin, e.g., a polyolefin resin such as a polyethylene resin and a polypropylene resin, a polyamide resin such as a nylon 6 resin and a nylon 6,6 resin, a polyester resin such as a polyethylene terephthalate resin and a polybutylene terephthalate resin, a polyether ketone resin, a polyethersulfone resin and an aromatic polyamide resin, can be used. It is preferred that the material for the thermoplastic resin fibers is selected appropriately depending on the combination with the matrix resin. Particularly, thermoplastic resin fibers produced using a resin that is the same as the matrix resin, a resin that is compatible with the matrix resin or a resin capable of highly bonding to the matrix resin are preferred, because the thermoplastic resin fibers never deteriorate the mechanical properties of a carbon fiber-reinforced plastic. For example, the thermoplastic resin fibers are preferably at least one type of fibers or particles selected from the group consisting of polyamide fibers, polyphenylene sulfide fibers, polypropylene fibers, polyether ether ketone fibers and phenoxy resin fibers.

In the present invention, the reinforcing fibers to be used in the reinforcing fiber non-woven fabric in the skin layer are not particularly limited. For example, carbon fibers, glass fibers, aramid fibers, alumina fibers, silicon carbide fibers, boron fibers, metal fibers, natural fibers, mineral fiber and the like can be used. These types of fibers may be used singly, or in a combination of two or more. Particularly, carbon fibers that are of the same type as that of the carbon fibers used in the core layer, such as PAN-type carbon fibers, pitch-type carbon fibers and rayon-type carbon fibers, can be used preferably, from the viewpoint of strength, stiffness and dimensional stability. Glass fibers are used particularly preferably from the viewpoint of the higher single fiber bending stiffness relative to that of the carbon fibers used in the core layer and the elimination of the influence of the surface unevenness caused by the carbon fiber bundles in the core layer during molding, or from the viewpoint of the decrease in the cooling rate for the skin layer and the core layer during stamping molding and the improvement in the followability to a molding mold and the pattern transfer performance in a surface texturing process or the like. When electromagnetic wave shielding properties and electric conductivity are required as in the case of electric devices and the like, metal fibers and carbon fibers having metal-deposited surfaces can be used preferably.

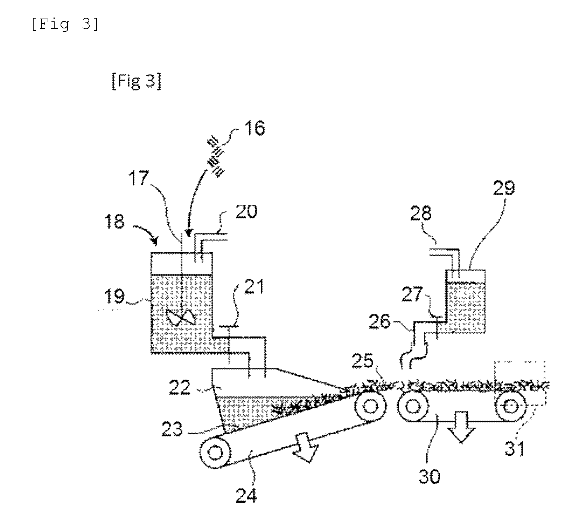

As a process for producing the reinforcing fiber non-woven fabric, carding, air-laying, a paper-making method and the like can be mentioned, as in the case of the carbon fiber non-woven fabric sheet. A paper-making method is a production method in which discontinuous fibers are spread, mixed and then formed into a sheet on a porous support, as illustrated in Fig. 3.

In the paper-making method, the reinforcing fiber non-woven fabric sheet may be made from only reinforcing fibers, as long as the purposes of the present invention, i.e., the prevention of the breakage of the reinforcing fibers, the retention of the shape of the reinforcing fiber non-woven fabric sheet, and the prevention of falling out of the reinforcing fibers, can be achieved, as in the case of the above-mentioned carding and air-laying and the carbon fiber non-woven fabric sheet. It is also possible to add thermoplastic resin fibers or thermoplastic resin particles or apply a binder to the reinforcing fiber non-fabric sheet.

The term "a binder" refers to a binder that is present between the reinforcing fiber non-woven fabric sheet and the thermoplastic resin to connect these materials to each other. The binder is generally a thermoplastic resin. Examples of the thermoplastic resin include an acrylic polymer, a vinyl polymer, a polyurethane resin, a polyamide resin and a polyester resin. One or more of these thermoplastic resins can be used preferably. It is preferred that the thermoplastic resin have at least one functional group selected from an amino group, an epoxy group, a carboxyl group, an oxazoline group, a carboxylate group and an acid anhydride group.

The reinforcing fiber non-woven fabric sheet to be used in the skin layer is required to have an increased fiber spreading degree compared with the carbon fiber non-woven fabric sheet used in the core layer. Examples of the carding method include a method in which discontinuous reinforcing fibers that have been spread in advance of being charged are charged into a carding device, a method in which the mesh sizes of wires in a carding device is reduced, and a method in which the number of revolutions of a roll in a carding device is controlled. Examples of the air-laying method include a method in which discontinuous reinforcing fibers that have been spread in advance of being charged are charged into an air-laying device, and a method in which the amount of compressed air is controlled. Examples of the paper-making method include a method in which the mixing conditions employed for the dispersion of the reinforcing fibers are adjusted, a method in which the concentration is reduced, a method in which the viscosity of a solution is controlled, and a method in which a vortex flow is controlled during the transfer of a dispersion solution.

The thermoplastic resin to be used in the matrix resin in the skin layer is not particularly limited, and can be selected appropriately, as long as the mechanical properties of the resultant molded article cannot be greatly deteriorated. The thermoplastic resin is preferably selected depending on the combination of the matrix resin in the core layer. For example, a resin, e.g., a polyolefin resin such as a polyethylene resin and a polypropylene resin, a polyamide resin such as a nylon 6 resin and a nylon 6,6 resin, a polyester resin such as a polyethylene terephthalate resin and a polybutylene terephthalate resin, a polyphenylene sulfide resin, a polyether ketone resin, a polyethersulfone resin, and an aromatic polyamide resin, can be used. Among these resins, any one of a polyamide resin, a polypropylene resin and a polyphenylene sulfide resin is preferred. Particularly, a thermoplastic resin comprising a resin that is the same as the matrix resin in the core layer, a resin having compatibility with the matrix resin in the core layer, or a resin having high bonding properties to the matrix resin in the core layer is preferred, because the thermoplastic resin never deteriorate the mechanical properties of the resultant molded article. Furthermore, in order to retain the structures of the skin layer and the core layer during molding more reliably, it is preferred that the viscosity of the matrix resin in the skin layer is equal to or larger than that of the matrix resin in the core layer. As the method for producing matrix resins of a single type having different viscosities from each other, a method in which the molecular weight of the matrix resin is increased and a method in which an additive such as an inorganic filler is added can be exemplified.

In order to achieve the concealment of the carbon fiber bundles more reliably, it is preferred that the thermoplastic resin to be used in the matrix resin in the skin layer contains a black inorganic filler, as long as the purposes of the present invention can be achieved. Examples of the black inorganic filler include carbon black, carbon nanotubes, and black-colored titanium oxide. From the viewpoint of economic performance, carbon black is preferably used. From the viewpoint of the electromagnetic wave-shielding performance and electric conductivity of the skin layer, carbon nanotubes are preferably used.

In the thermoplastic resin contained in the skin layer to be used in the present invention, an additive or the like which is exemplified as an additive for use in the matrix resin in the core layer may be added depending on the intended use, as long as the purposes of the present invention can be achieved. Particularly when it is intended to develop the effect of an additive in the stampable sheet by adding the additive in a small amount, it is possible to add the additive to only the thermoplastic resin in the skin layer to achieve the effect of the additive.

In the present invention, for the impregnation of the carbon fiber non-woven fabric sheet or the reinforcing fiber non-woven fabric sheet with a matrix resin, it is possible to produce a carbon fiber non-woven fabric sheet or a reinforcing fiber non-woven fabric sheet each containing thermoplastic resin fibers or thermoplastic resin particles, in which the thermoplastic resin fibers or the thermoplastic resin particles contained in the carbon fiber non-woven fabric sheet or the reinforcing fiber non-woven fabric sheet serve as a matrix resin. It is also possible to use a carbon fiber non-woven fabric sheet or a reinforcing fiber non-woven fabric sheet each containing no thermoplastic resin fiber or thermoplastic resin particle as a raw material and impregnate the non-woven fabric sheet with a matrix resin in any stage during the production of the stampable sheet. Even in the case where a carbon fiber non-woven fabric sheet or a reinforcing fiber non-woven fabric sheet each containing thermoplastic resin fibers or thermoplastic resin particles is used as a raw material, it is possible to impregnate the non-woven fabric sheet with a matrix resin in any stage in the production of the stampable sheet. In this case, the resin constituting the thermoplastic resin fibers or the thermoplastic resin particles and the matrix resin may be of the same type as each other or of different types from each other. When the resin constituting the thermoplastic resin fibers or the thermoplastic resin particles and the matrix resin are different from each other, it is preferred that the resin and the matrix resin are compatible with each other or have higher affinity for each other.

In the production of the stampable sheet, the impregnation process of impregnating each of the carbon fiber non-woven fabric sheet and the reinforcing fiber non-woven fabric sheet with a thermoplastic resin that serves as the matrix resin to produce the stampable sheet may be carried out with a press machine having a heating function. The press machine is not particularly limited, as long as the temperatures and pressures required for the impregnation with the matrix resins can be achieved. For example, a conventional press machine equipped with a flat platen that can move vertically, and a so-called "double-belt press machine" having such a mechanism that a pair of endless steel belts can run can be used. In the impregnation process, it is possible to form each of the matrix resin for the core layer and the matrix resin for the skin layer into a sheet-like product, such as a film, a non-woven fabric and a woven fabric, then laminate the sheet-like products on the carbon fiber non-woven fabric sheet and the reinforcing fiber non-woven fabric sheet, respectively, and then press the resultant laminates on each other with the press machine to melt the matrix resin for the core layer and the matrix resin for the skin layer integrally or to impregnate the non-woven fabric sheets with the matrix resins integrally. Alternatively, it is also possible to separately produce a product for the core layer, which is produced by laminating the carbon fiber non-woven fabric sheet on a sheet-like product, such as a film, a non-woven fabric and a woven fabric, of the matrix resin for the core layer in advance and then melting the matrix resin or impregnating the non-woven fabric sheet with the matrix resin, and a product for the skin layer, which is produced by laminating the reinforcing fiber non-woven fabric sheet on a sheet-like product, such as a film, a non-woven fabric and a woven fabric, of the matrix resin for the skin layer in advance and then melting the matrix resin or impregnating the non-woven fabric sheet with the matrix resin, then laminate the product for the skin layer and the product for the core layer on each other so as to integrate the resultant laminate. Alternatively, it is also possible to employ a method comprising producing discontinuous thermoplastic resin fibers or thermoplastic resin particles using a matrix resin, then adding the discontinuous thermoplastic resin fibers or thermoplastic resin particles during the process of producing a carbon fiber non-woven fabric sheet and a reinforcing fiber non-woven fabric sheet to produce a carbon fiber non-woven fabric sheet and a reinforcing fiber non-woven fabric sheet each containing the matrix resin and the thermoplastic resin fibers or thermoplastic resin particles, and then heating and compressing the carbon fiber non-woven fabric sheet and the reinforcing fiber non-woven fabric sheet with a press machine or the like.

The resultant stampable sheet can be molded into a molded article by a conventional known method, as long as the purposes of the present invention cannot be failed. The method for producing a molded article is not particularly limited. An example of the method is a stamping molding method in which the stampable sheet is pre-heated to a temperature equal to or higher than the melting temperatures of the resins constituting the stampable sheet with a heating device, e.g., an infrared ray (IR) heater, under an oxygen atmosphere or a nitrogen atmosphere, then the pre-heated product is charged within a mold that is kept at a temperature equal to or lower than the solidifying temperatures of the resins immediately after the pre-heating, then the mold is transferred, and then the mold is closed to mold the stampable sheet.

As a preferred example, it is possible that, during the stamping molding, the surface of the mold which is to be in contact with the skin layer of the stampable sheet is texture-processed. In this case, a molded article having excellent decorative characteristics can be produced.

The resultant molded article can be used suitably as a housing member for an automotive member, an aircraft member, a household electric appliance, a stationery electric product, a personal computer or the like. Particularly, the molded article can be used suitably as an inner member for an automotive member or an aircraft member for which decorative characteristics are required.

Hereinbelow, examples and comparative examples of the present invention will be described.

At first, the properties and measurement methods employed in the examples and comparative examples will be described.

(1) Method for measuring bundles

A specimen having a size of 100 mm × 100 mm was cut out from a stampable sheet comprising a carbon fiber composite material. Subsequently, the specimen was heated in an electric furnace, which had been heated to 500°C, for about 1 to 2 hours to burn out organic substances including a matrix resin from the specimen. After cooling the resultant product to room temperature, the mass of the remaining carbon fiber non-woven fabric sheet was measured. Subsequently, all of carbon fiber bundles were picked up from the carbon fiber non-woven fabric sheet with a pair of tweezers. All of the carbon fiber bundles which were picked up were subjected to the measurement of the weight (Mn) and length (Ln) of each carbon fiber bundles with a weighing machine capable of measuring a weight down to 1/10000 g. After the measurement, a value $x_n = Mn/(Ln \times F)$ was calculated on the individual bundles. In the formula, F represents the fineness of a carbon fiber, and $x_n$ represents the number of fibers constituting a carbon fiber bundle. After the calculation, the total number of bundles ($N_B$) was determined employing the total weight ($M_B$) of carbon fiber bundles (B) wherein the carbon fiber bundles (B) are fiber bundles each having a value $x_n$ of 100 or more. The determination was carried out in the same manner employing the total weight ($M_C$) of carbon fiber bundles (C), wherein the carbon fiber bundles (C) are fiber bundles each having a value $x_n$ of less than 100. Fiber bundles which had been spread to such an extent that the fiber bundles could not be picked up with the tweezers were weighed in a mass finally. In the case where the fiber lengths of the fiber bundles were too short to measure the weights of the fiber bundles, it is possible to group the fiber bundles based on the lengths at about 0.2 mm intervals, then weigh some of grouped fiber bundles in a mass, and then determine an average value. After all of the fiber bundles are grouped and measured, the carbon fiber bundles (B) are calculated with respect to a value defined by the formula: $M_B/(M_B+M_C) \times 100$(wt%) to determine the proportion Z of the carbon fiber bundles (B) relative to the total weight of the carbon fibers. Subsequently, the carbon fiber bundles (B) are calculated with respect to a value $x = \sum\{Mn/(Ln \times F)\}/N$ and a value $\sigma = \{1/N \times \sum(x_n\text{-}x)^2\}^{1/2}$ to determine the average value x of the number of fiber bundle-constituting fibers and the standard deviation $\sigma$ of the fiber bundle-constituting fibers in the carbon fiber bundles (B).

(2) Measurement of bundle width

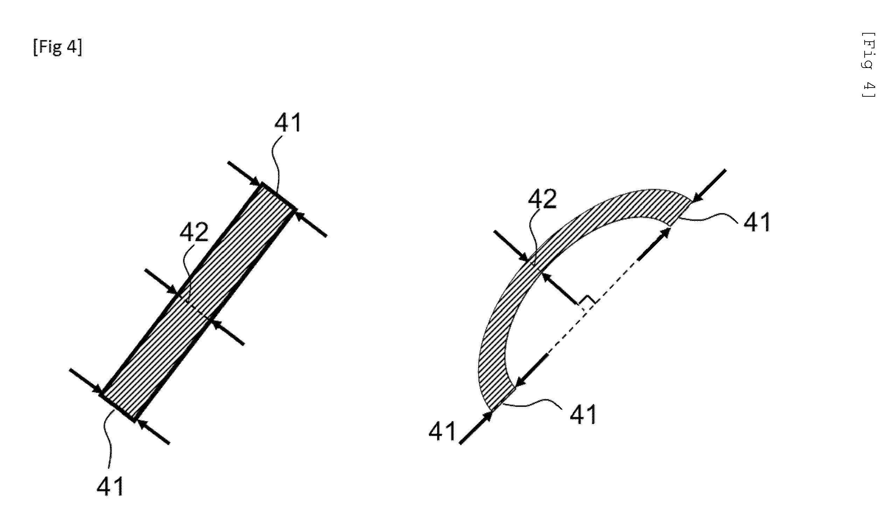

A specimen having a size of 100 mm $\times$ 100 mm was cut out from a stampable sheet, and then the specimen was heated in an electric furnace, which had been heated to 550°C, for about 1 to 2 hours to burn out organic substances including a matrix resin from the specimen. A carbon fiber non-woven fabric and a reinforcing fiber non-woven fabric were separated from the burned specimen and then removed separately. All of carbon fiber bundles and reinforcing fiber bundles which were respectively seen through the surface of the carbon fiber non-woven fabric and the surface of the reinforcing fiber non-woven fabric were measured on their bundle widths without any modification using a digital microscope ("VHX-2000", manufactured by KEYENCE Corporation). Bundles each having a bundle width of 100 $\mu$m or more were selected randomly on the basis of the measured bundle widths, and an average value of the bundle widths of the bundles was determined. The average value was employed as an average bundle width. The term "bundle width" refers to an average value of bundle widths measured at both endpoints 41 of a bundle and a midpoint 42 of the bundle, i.e., three points in total, as shown in Fig. 4. When both endpoints and a midpoint of a bundle are hidden by another fiber bundles and therefore cannot be seen, it is possible to pick up the bundle with a pair of tweezers or the like in such a manner that the bundle width of the bundle is never altered and then measure the bundle width. In Fig. 4, two arrows adjacent to endpoints 41 and a midpoint 42 mean that a distance between the two arrows is the bundle width of the bundle.
In addition to the above-mentioned method, a method in which a carbon fiber non-woven fabric and a reinforcing fiber non-woven fabric are measured in a sheet that is not formed into a stampable sheet yet, and a method in which a specimen is cut out from a molded article after molding, then the specimen is heated in an electric furnace to burn out organic substances including a matrix resin from the specimen, and then a carbon fiber non-woven fabric and a reinforcing fiber non-woven fabric are removed and then subjected to the measurement, and the like can be exemplified.
With respect to the carbon fiber non-woven fabric, the number of bundles each having a bundle width of 150 $\mu$m or more and the number of bundles each having a bundle width of more than 5 mm are counted on the basis of the above-measured bundle widths.
With respect to the reinforcing fiber non-woven fabric in the skin layer, the number of bundles each having a bundle width of 150 $\mu$m or more is counted.
In the column "number of bundles each having bundle width of 150 $\mu$m or more" for "core layer" in the tables, it is rated as "○ (good)" when there are five or more bundles each having a bundle width of 150 $\mu$m or more in the carbon fiber non-woven fabric in the core layer, and it is rated as "× (bad) " when there are less than five of them. In the column "number of bundles each having bundle width of more than 5 mm" for "core layer" in the tables, it is rated as "○ (good)" when there are less than five bundles each having a bundle width of more than 5 mm in the carbon fiber non-woven fabric in the core layer, and it is rated as "× (bad)" when there are five or more of them.
In the column "number of bundles each having bundle width of 150 $\mu$m or more" for "skin layer" in the tables, it is rated as "× (bad)" when there are five or more bundles each having a bundle width of 150 $\mu$m or more in the reinforcing fiber non-woven fabric in the skin layer, and it is rated as "○ (good)" when there are less than five of them.

(3) Vf (contents of carbon fibers and reinforcing fibers in stampable sheet)

A specimen having a weight of about 2 g was cut out from a molded article produced from a stampable sheet, and the mass of the specimen was measured. Subsequently, the specimen was heated in an electric furnace, which had been heated to 500°C, for about 1 to 2 hours to burn out organic substances including a matrix resin from the specimen. After cooling the specimen to room temperature, the mass of each of carbon fibers and reinforcing fibers both remaining in the cooled product were measured separately. The ratio of the mass of each of the carbon fibers and the reinforcing fibers to the mass of the specimen from which the organic substances including the matrix resin were not burnt out yet was determined. The ratios determined in this manner were employed as the content of the carbon fibers and the content of the reinforcing fibers, respectively.

(4) Bending strength

Bending strength was determined in accordance with JIS-K7171. With respect to bending strength, a CV value (a coefficient of variation [%]) of bending strength was also calculated. It was rated as "○ (good)" when the CV value of bending strength was less than 5% (in which the variation in bending strength values was small), and it was rated as "× (bad) " when the CV value of bending strength was 5% or more (in which the variation in bending strength values was large).

(5) Single fiber bending stiffness (Pa•m$^4$)

The single fiber bending stiffness was calculated in accordance with the following formula.

$$\mathtt{Single\ fiber\ bending\ stiffness\ =\ E\ \times\ I}$$

In the formula,
E: a single fiber elastic modulus; and
I: a cross-sectional secondary moment.
On the assumption that the cross section of a fiber was a true circle, a cross-sectional secondary moment was determined from the diameter (D) of the fiber, and bending stiffness was determined from a single fiber tensile elastic modulus and the cross-sectional secondary moment.

(6) Evaluation of fluidity [fluidity test (stamping molding)]

Two stampable sheets each having a size of 100 mm × 100 mm × 2 mm were pre-heated at 240°C, then overlaid on each other, then placed on a press device that had been heated to 80°C, and then compressed at 10MPa for 30 seconds. The surface area A2 of the laminate after the compression and the surface area A1 of the laminate before the compression were measured, and an A2/A1 ratio was defined as fluidity (%).

(7) Evaluation of surface appearance

A stampable sheet having a size of 100 mm × 100 mm was placed on a horizontal table, the surface of the stampable sheet was observed with naked eyes in the vertical direction from a position at a height of 300 mm, and it was determined as to whether or not the carbon fiber bundles in the core layer and the reinforcing fiber bundles in the skin layer could be seen through the surface. A specimen in which the bundles were seen clearly was rated as "× (bad)", and a specimen in which the bundles were not seen was rated as "○ (good)". A specimen in which parts of the bundles were seen dimly but was acceptable was rated as "Δ (acceptable)".

(8) Measurement of color of surface (measurement of L value)

An L value was measured with a measurement instrument "a SM color computer" ("MODEL SM-5", manufactured by Suga Test Instruments Co., Ltd.). The conditions for the measurement were as follows.
Measurement conditions: D65-10° field, measured at three points;
Reflection measurement: a condenser lens ($\varphi$30 mm), a test table ($\varphi$30 mm)

(9) Evaluation of pattern transfer performance and surface appearance of pattern-transferred surface

In the evaluation, a mold in which a leather-like pattern was formed on one of an upper mold and a lower mold was used. Two stampable sheets each having a size of 100 mm × 100 mm × 2 mm were pre-heated to 240°C, then overlaid on each other, then placed between the upper mold and the lower mold which had been heated to 80°C, and then compressed at 10MPa for 30 seconds. The resultant molded plate was placed on a horizontal table with a surface having the leather-like pattern transferred thereon up, and then the molded plate was observed with naked eyes in the vertical direction from a position having a height of 300 mm to determine whether or not protrusions and depressions were transferred. A molded plate on which protrusions and depressions were transferred was rated as "○ (good)", and a molded plate in which the chipping of at least a part of the protrusions or depressions or the like occurred and therefore patterns were not transferred was rated as "× (bad) ". The plate was tilted in one direction at an angle of 0°, 30° and 60°, and it was determined as to whether or not fiber bundles were seen through the textured surface. A plate in which carbon fiber bundles in the core layer were seen through the pattern-transferred surface was rated as "× (bad) ", and a plate in which parts of the carbon fiber bundles were not seen was rated as "○ (good) ". A plate in which parts of the carbon fiber bundles were seen dimly but was acceptable was rated as "Δ (acceptable)".

(10) Method for measuring number average fiber length

A specimen having a size of 100 mm × 100 mm was cut out from a stampable sheet, and then the specimen was heated in an electric furnace, which had been heated to 500°C, for about 1 to 2 hours to burn out organic substances including a matrix resin from the specimen. After cooling the specimen to room temperature, a carbon fiber non-woven fabric sheet in a core layer and a reinforcing fiber non-woven fabric sheet in a skin layer which were remained after the cooling were separated. Subsequently, 200 carbon fibers were randomly picked up from the carbon fiber non-woven fabric sheet in the core layer with a pair of tweezers, and then the length of each of the carbon fibers was measured down to 0.1 mm on an optical microscope or a scanning electron microscope. The number average fiber length in the carbon fiber non-woven fabric sheet in the core layer was calculated in accordance with the formula: number average fiber length = $\Sigma Li/200$. In the formula, Li represents the length of a fiber measured. The number average fiber length in the reinforcing fiber non-woven fabric in the skin layer was also determined in the same manner as mentioned above. That is, 200 reinforcing fibers were randomly picked up from the reinforcing fiber non-woven fabric with a pair of tweezers, and then the length of each of the reinforcing fibers was measured down to 0.1 mm on an optical microscope or a scanning electron microscope. The number average fiber length in the reinforcing fiber non-woven fabric sheet in the core layer was calculated in accordance with the above-shown formula.

EXAMPLES

At first, carbon fibers, carbon fiber bundles (which are not cut yet), glass fiber non-woven fabrics, glass fibers, a Kevler fibers and carbon black used in Examples and Comparative Examples of the present invention are described.

Carbon fibers (1) and carbon fiber bundles:

Continuous carbon fiber bundles each having a fiber diameter of 7 $\mu$m, a tensile elastic modulus of 230 GPa, a single fiber bending stiffness of 2.7 × $10^{-11}$ Pa•m$^4$, and a number of filaments of 12000 were used.

<Carbon fiber non-woven fabric (1)>

The carbon fiber bundles (1) were cut into fiber lengths of 10 mm, and the cut carbon fibers were made into a non-woven fabric by a paper-making method, thereby producing a carbon fiber non-woven fabric sheet produced by a paper-making method and having an area fiber density of 30 g/m$^2$. The carbon fiber non-woven fabric had excellent fiber spreading properties and contained bundles each having a bundle width of more than 150 $\mu$m in an amount of less than 5 bundles per a 100 mm square.

<Carbon fiber non-woven fabric (2)>

The carbon fiber bundles (1) were cut into fiber lengths of 15 mm, and the cut carbon fibers were made into a non-woven fabric by a paper-making method, thereby producing a carbon fiber non-woven fabric sheet produced by a paper-making method and having an area fiber density of 100 g/m$^2$. The carbon fiber non-woven fabric had excellent fiber spreading properties and contained bundles each having a bundle width of more than 150 $\mu$m in an amount of less than 5 bundles per a 100 mm square.

<Glass fiber non-woven fabric (1)>

As a glass fiber non-woven fabric, Nittobo surface mat ("MF 30P 104", manufactured by Nitto Boseki Co., Ltd.) (a non-woven fabric sheet having an area fiber density of 30 g/m$^2$, a single fiber diameter of 23 $\mu$m, a fiber length of 15 mm, a tensile elastic modulus of 75 GPa, a single fiber bending stiffness of 1.2 × $10^{-9}$ Pa•m4) was used. The glass fiber non-woven fabric (1) is a non-woven fabric having excellent fiber spreading properties.

Glass fibers (1) and glass fiber bundles (1) :

As glass fibers, a roving having a fiber diameter of 10 μm, a tensile elastic modulus of 75 GPa and a single fiber bending stiffness of $3.7 \times 10^{-11}$ Pa•m$^4$ ("RS 460 A-782", manufactured by Nitto Boseki Co., Ltd.) was used.

<Glass fiber non-woven fabric (2)>

The glass fiber bundles (1) were cut into fiber lengths of 6 mm, and the cut glass fibers were made into a non-woven fabric by a paper-making method, thereby producing a glass fiber non-woven fabric sheet having an area fiber density of 30 g/m$^2$. The glass fiber non-woven fabric had poor fiber spreading properties and contained bundles each having a bundle width of more than 150 μm in an amount of 5 or more bundles per a 100 mm square.
<Glass fiber non-woven fabric (3)>
The glass fiber bundles (1) were cut into fiber lengths of 15 mm, and the cut glass fibers were made into a non-woven fabric by a paper-making method, thereby producing a glass fiber non-woven fabric sheet having an area fiber density of 15 g/m$^2$. The glass fiber non-woven fabric had excellent fiber spreading properties and contained bundles each having a bundle width of more than 150 μm in an amount of less than 5 bundles per a 100 mm square.

Kevler fibers (1) :

Kevler fibers ("Kevlar" (trade name) 29 filament", manufactured by Du Pont-Toray Co., Ltd.) (a fiber diameter: 12 μm, a tensile elastic modulus: 70 GPa, a single fiber bending stiffness: $7.37 \times 10^{-11}$ Pa•m$^4$) were used.

<Kevler fiber non-woven fabric (1)>

The Kevler fibers (1) were cut into fiber lengths of 10 mm, and the cut Kevler fibers were made into a non-woven fabric by a paper-making method, thereby producing a Kevler fiber non-woven fabric sheet having an area fiber density of 30 g/m$^2$. The Kevler fiber non-woven fabric had excellent fiber spreading properties and contained bundles each having a bundle width of more than 150 μm in an amount of less than 5 bundles per a 100 mm square.

Carbon black (CB):

A nylon-made carbon black master pellet ("M040B2", the amount of CB added: 20 wt%, manufactured by Toray Industries Inc.) was diluted upon use.

Example 1:

The carbon fiber bundles (1) were cut into fiber lengths of 10 mm, the cut carbon fiber bundles were mixed with nylon 6 short fibers (short fiber fineness: 1.7 dtex, cut length: 51 mm, number of crimps: 12 crimps/25 mm, percentage of crimp: 15%) at a ratio of 90 : 10 by mass, and the resultant mixture was charged into a carding device. A web discharged from the carding device was cross-wrapped to form a sheet-like carbon fiber non-woven fabric sheet which was composed of carbon fibers and nylon 6 fibers and having an area fiber density of 100 g/cm$^2$. In the carbon fiber non-woven fabric sheet, the content of the carbon fiber bundles (B) relative to the total weight of the carbon fibers was 43 wt%, the average value x of the numbers of constituent fibers of the individual bundles was 380, the standard deviation σ of the numbers of constituent fibers of the individual bundles was 230, and the number of bundles each having a bundle width of 150 μm or more was 5 or more and the number of bundles each having a bundle width of more than 5 mm was less than 5 per a 100 mm square of the non-woven fabric sheet.
The direction of winding of the sheet-like carbon fiber non-woven fabric sheet was defined as 0°. The carbon fiber non-woven fabric sheet and a nylon resin film (" CM1001", ηr = 2.3, manufactured by Toray Industries Inc.) were laminated on each other to form a core layer, and then both of the glass fiber non-woven fabric (1) and the nylon resin film were laminated to form a skin layer on one surface of the above-produced laminate in such a manner that the skin layer thickness calculated on the assumption that ideally no void was contained in the skin layer became 100 μm, thereby producing a stampable sheet having a (carbon fibers) : (reinforcing fibers) : (thermoplastic resin) ratio of 28 : 0.6 : 71.4 by volume. Subsequently, the whole body of the stampable sheet was sandwiched by stainless plates, then pre-heated at 260°C for 90 seconds, and then hot-pressed at 260°C for 180 seconds while applying a pressure of 2.0 MPa. Subsequently, the hot-pressed product was cooled to 50°C while applying a pressure, thereby producing a 2 mm-thick flat plate (a stampable sheet) made from a carbon fiber composite material. The flat plate was not warped. When the bending strength of the flat plate was measured in both the 0° direction and the 90° direction with respect to the 0° direction on the core layer, the average value of the bending strength in the 0° direction and the bending strength in the 90° direction was 455 MPa and the CV value of the bending strength values was less than 5%.

A specimen having a size of 100 mm × 100 mm was cut out from the flat plate, and the appearance of the skin layer side of the specimen was observed. As the result, the carbon fiber bundles in the core layer was not seen through the surface of the flat plate, and the number of bundles each having a bundle width of 150 $\mu$m or more in the reinforcing fiber non-woven fabric in the skin layer was 0, i.e., less than 5. The conditions, measurement items, and the results of evaluation are shown in Table 1.

Example 2:

The same procedure as in Example 1 was carried out, except that the flat plate was produced using, as the skin layer, the carbon fiber non-woven fabric (1) which had been produced by cutting the carbon fiber bundles (1) into lengths of 10 mm and subjecting the cut carbon fiber bundles to a paper-making method and which had an area fiber density of 30 g/m². In the carbon fiber non-woven fabric which was used as the skin layer, the number of bundles each having a bundle width of more than 150 $\mu$m was 0, i.e., less than 5, and the fibers were spread almost to a single fiber level. The results are shown in Table 1.

Example 3:

The same procedure as in Example 1 was carried out, except that the flat plate was produced using, as the skin layer, the Kevler fiber non-woven fabric (1) which had been produced by cutting the Kevler fibers (1) into lengths of 10 mm and subjecting the cut Kevler fibers to a paper-making method and which had an area fiber density of 30 g/m². In the Kevler fiber non-woven fabric which was used as the skin layer, the number of bundles each having a bundle width of more than 150 $\mu$m was 0, i.e., less than 5, and the fibers were spread almost to a single fiber level. The results are shown in Table 1.

Example 4:

The same procedure as in Example 1 was carried out, except that the carbon black master pellet was diluted with a nylon resin ("CM1001", $\eta$r = 2.3, manufactured by Toray Industries Inc.) in such a manner that carbon black was contained in an amount of 3 parts by weight relative to 100 parts by weight of the nylon resin to produce a nylon resin film that served as the skin layer. The results are shown in Table 1. The stampable sheet thus produced had excellent bundle concealment performance and also had an excellent surface color.

Example 5:

The same procedure as in Example 1 was carried out, except that a carbon fiber non-woven fabric in which the content of the carbon fiber bundles (B) relative to the total weight of the carbon fibers was 66 wt%, the average value x of the numbers of constituent fibers in individual fiber bundles was 724, the standard deviation $\sigma$ of the numbers of constituent fibers in individual fiber bundles was 412, and the number of bundles each having a bundle width of 150 $\mu$m or more was 5 or more and the number of bundles each having a bundle width of more than 5 mm was less than 5 per a 100 mm square of the non-woven fabric sheet was used as the core layer. The results are shown in Table 1.

Example 6:

The same procedure as in Example 1 was carried out, except that a carbon fiber non-woven fabric which was produced by cutting the carbon fiber bundles (1) into fiber lengths of 15 mm and in which the content of the carbon fiber bundles (B) relative to the total weight of the carbon fibers was 38 wt%, the average value x of the numbers of constituent fibers in individual fiber bundles was 350, the standard deviation $\sigma$ of the numbers of constituent fibers in individual fiber bundles was 250, and the number of bundles each having a bundle width of 150 $\mu$m or more was 5 or more and the number of bundles each having a bundle width of more than 5 mm was less than 5 per a 100 mm square of the non-woven fabric sheet was used as the core layer. The results are shown in Table 1.

Example 7:

The same procedure as in Example 6 was carried out, except that a nylon resin film produced by adding carbon black to a nylon resin film in an amount of 3 parts by weight relative to 100 parts by weight of a nylon resin was used as the skin layer. The results are shown in Table 1. The stampable sheet thus produced had excellent bundle concealment performance and also had an excellent surface color.

Example 8:

The same procedure as in Example 1 was carried out, except that a carbon fiber non-woven fabric which was produced by cutting the carbon fiber bundles (1) into fiber lengths of 25 mm and in which the content of the carbon fiber bundles (B) relative to the total weight of the carbon fibers was 31 wt%, the average value x of the numbers of constituent fibers in individual fiber bundles was 220, the standard deviation $\sigma$ of the numbers of constituent fibers in individual fiber bundles was 160, and the number of bundles each having a bundle width of 150 $\mu$m or more was 5 or more and the number of bundles each having a bundle width of more than 5 mm was less than 5 per a 100 mm square of the non-woven fabric sheet was used as the core layer. The results are shown in Table 1.

Example 9:

The same procedure as in Example 1 was carried out, except that a carbon fiber non-woven fabric which was produced by cutting the carbon fiber bundles (1) into fiber lengths of 15 mm and in which the content of the carbon fiber bundles (B) relative to the total weight of the carbon fibers was 20 wt%, the average value x of the numbers of constituent fibers in individual fiber bundles was 205, the standard deviation $\sigma$ of the numbers of constituent fibers in individual fiber bundles was 154, and the number of bundles each having a bundle width of 150 $\mu$m or more was 5 or more and the number of bundles each having a bundle width of more than 5 mm was less than 5 per a 100 mm square of the non-woven fabric sheet was used as the core layer. The results are shown in Table 1.

Example 10:

The same procedure as in Example 5 was carried out, except that the skin layer was produced by producing the glass fiber non-woven fabric sheet (3) having an area fiber density of 15 g/m$^2$ and a nylon non-woven fabric (in which the glass fiber non-woven fabric sheet (3) was produced by cutting the glass fiber bundles (1) into fiber lengths of 15 mm and then processing the cut glass fibers into a non-woven fabric by a paper-making method and the nylon non-woven fabric was produced by processing a nylon resin ("CM1001", $\eta$r = 2.3, manufactured by Toray Industries Inc.) into a melt-blow non-woven fabric having an area fiber density of 25 g/m$^2$), and then laminating the glass fiber non-woven fabric and the nylon non-woven fabric on each other in such a manner that the skin layer thickness calculated on the assumption that ideally no void was contained in the skin layer became 29 $\mu$m. The stampable sheet thus produced had almost excellent surface appearance and therefore was acceptable. However, parts of bundles of the core layer were seen dimly.

Example 11:

The same procedure as in Example 8 was carried out, except that the glass fiber non-woven fabric and the nylon resin film were laminated on each other in such a manner that the skin layer thickness calculated on the assumption that ideally no void was contained in the skin layer became 1200 $\mu$m. The stampable sheet thus produced had excellent surface appearance and fluidity. The stampable sheet was warped and had slightly decreased bending strength, but was acceptable.

Comparative Example 1:

The same procedure as in Example 1 was carried out, except that the glass fiber non-woven fabric (2) which was produced by cutting the glass fiber bundles (1) into fiber lengths of 6 mm and then processing the cut glass fibers into a non-woven fabric by a paper-making method and which had an area fiber density of 30 g/m$^2$ was used as the skin layer. The results are shown in Table 2. In the stampable sheet thus produced, bundles in the skin layer was seen through the surface of the stampable sheet, and therefore the appearance, pattern transfer performance and surface appearance of the pattern-transferred surface of the stampable sheet were poor.

Comparative Example 2:

The same procedure as in Example 1 was carried out, except that the carbon fiber non-woven fabric (2) which was produced by cutting the carbon fiber bundles (1) into fiber lengths of 10 mm and then subjecting the cut glass fibers to a paper-making method and in which the content of the carbon fiber bundles (B) relative to the total weight of the carbon fibers was 5 wt%, the average value x of the numbers of constituent fibers in individual fiber bundles was 120 and the standard deviation σ of the numbers of constituent fibers in individual fiber bundles was 30 was used as the core layer. The results are shown in Table 2. The stampable sheet thus produced had poor fluidity.

Comparative Example 3:

The same procedure as in Example 1 was carried out, except that the carbon fiber non-woven fabric (2) which was produced by cutting the carbon fiber bundles (1) into fiber lengths of 15 mm and then subjecting the cut glass fibers to a paper-making method and in which the content of the carbon fiber bundles (B) relative to the total weight of the carbon fibers was 0 wt%, the number of bundles each having a bundle width of 150 μm or more was 0 per a 100 mm square of the non-woven fabric sheet, and the fiber bundles were spread approximately to a single fiber level was used as the core layer and no skin layer was provided, to produce a stampable sheet. The results are shown in Table 2. The stampable sheet thus produced had poor fluidity.

Comparative Example 4:

The same procedure as in Example 1 was carried out, except that a stampable sheet was produced without a skin layer. The results are shown in Table 2. In the stampable sheet thus produced, the carbon fiber bundles in the core layer was seen clearly through the surface of the stampable sheet and therefore the appearance of the stampable sheet was poor.

Comparative Example 5:

The same procedure as in Example 4 was carried out, except that a stampable sheet in which the glass fiber non-woven fabric (1) was eliminated from the skin layer was produced. The results are shown in Table 2. In the stampable sheet thus produced, the carbon fiber bundles in the core layer was seen clearly through the surface of the stampable sheet and therefore the appearance of the stampable sheet was poor.

Comparative Example 6:

The same procedure as in Example 1 was carried out, except that the core layer was produced by cutting the carbon fiber bundles (1) into fiber lengths of 10 mm and then scattering the cut carbon fiber bundles uniformly onto a matched die mold having a size of 300 × 300 mm, and a nylon resin film ("CM1001", ηr = 2.3, manufactured by Toray Industries Inc.) was laminated on the core layer in such a manner that the ratio of the amount of the carbon fibers to the amount of the thermoplastic resin in the core layer became 30 : 70 by volume. In the stampable sheet thus produced, bundles in the core layer were seen through the surface and therefore the surface appearance of the stampable sheet was poor, and the bending strength values were also poor and were varied to a large extent.

[Table 1-1]

| | Examples | | 1 | 2 | 3 | 4 | 5 | 6 |
|---|---|---|---|---|---|---|---|---|
| Core layer | carbon fiber | | (1) | (1) | (1) | (1) | (1) | (1) |
| | carbon fiber cut length | [mm] | 10 | 10 | 10 | 10 | 10 | 15 |
| | number of bundles each having bundle width of 150 μm or more | | ○ (good) | ○ (good) | ○ (good) | ○ (good) | ○ (good) | ○ (good) |
| | number of bundles each having bundle width of more than 5 mm | | ○ (good) | ○ (good) | ○ (good) | ○ (good) | ○ (good) | ○ (good) |
| | average bundle width of carbon fiber bundles (A) | [μm] | 160 | 160 | 160 | 160 | 310 | 153 |
| | proportion of carbon fiber bundles (B) | [%] | 43 | 43 | 43 | 43 | 66 | 38 |
| | x: average value of number of bundle-constituting fibers | [fibers] | 380 | 380 | 380 | 380 | 724 | 350 |
| | σ: standard deviation | | 230 | 230 | 230 | 230 | 412 | 250 |
| | thermoplasatic resin | | CM1001 | CM1001 | CM1001 | CM1001 | CM1001 | CM1001 |
| | additive | | none | none | none | none | none | none |
| | thickness | [mm] | 2.0 | 2.0 | 2.0 | 2.0 | 2.0 | 2.0 |
| Skin layer | reinforcing fiber | | glass fiber non-woven fabric (1) | carbon fiber non-woven fabric (1) | Kevler fiber non-woven fabric (1) | glass fiber non-woven fabric (1) | glass fiber non-woven fabric (1) | glass fiber non-woven fabric (1) |
| | reinforcing fiber cut length | [mm] | 15 | 10 | 10 | 15 | 15 | 15 |
| | presence or absence of bundles each having bundle width of 150 μm or more | | absent | absent | absent | absent | absent | absent |
| | number of bundles each having bundle width of 150 μm or more | | ○ (good) | ○ (good) | ○ (good) | ○ (good) | ○ (good) | ○ (good) |
| | thermoplastic resin | | CM1001 | CM1001 | CM1001 | CM1001 | CM1001 | CM1001 |
| | additive | | none | none | none | CB | none | none |

(continued)

| Examples | | 1 | 2 | 3 | 4 | 5 | 6 |
|---|---|---|---|---|---|---|---|
| thickness | [μm] | 100 | 100 | 100 | 100 | 100 | 100 |

[Table 1-2]

| | Examples | | 1 | 2 | 3 | 4 | 5 | 6 |
|---|---|---|---|---|---|---|---|---|
| Properties of stampable sheet | Vf of carbon fiber | [%] | 28 | 28 | 28 | 28 | 28 | 28 |
| | Vf of reinforcing fiber | [%] | 0.6 | 0.8 | 1.0 | 0.6 | 0.6 | 0.6 |
| | evaluation of surface appearace | | ○ (good) | ○ (good) | ○ (good) | ○ (good) | ○ (good) | ○ (good) |
| | color of surface (L value) | | 33 | 26 | 32 | 21 | 32 | 32 |
| | fluidability | [%] | 320 | 300 | 305 | 320 | 338 | 300 |
| | bending strength JIS-K7171 | [MPa] | 455 | 475 | 460 | 455 | 435 | 460 |
| | CV value | | ○ (good) | ○ (good) | ○ (good) | ○ (good) | ○ (good) | ○ (good) |
| | pattern transfer performance | | ○ (good) | ○ (good) | ○ (good) | ○ (good) | ○ (good) | ○ (good) |
| | evaluation of surface appearace of pattern-transferred surface | | ○ (good) | ○ (good) | ○ (good) | ○ (good) | ○ (good) | ○ (good) |

[Table 1-3]

| | Examples | | 7 | 8 | 9 | 10 | 11 |
|---|---|---|---|---|---|---|---|
| Core layer | carbon fiber | | (1) | (1) | (1) | (1) | (1) |
| | carbon fiber cut length | [mm] | 15 | 25 | 15 | 10 | 25 |
| | number of bundles each having bundle width of 150 μm or more | | ○ (good) | ○ (good) | ○ (good) | ○ (good) | ○ (good) |
| | number of bundles each having bundle width of more than 5 mm | | ○ (good) | ○ (good) | ○ (good) | ○ (good) | ○ (good) |
| | average bundle width of carbon fiber bundles (A) | [μm] | 153 | 100 | 144 | 310 | 100 |
| | proportion of carbon fiber bundles (B) | [%] | 38 | 31 | 20 | 66 | 30 |
| | ×: average value of number of bundle-constituting fibers | [fiber] | 350 | 220 | 205 | 724 | 220 |
| | σ: standard deviation | | 250 | 160 | 154 | 412 | 160 |
| | thermoplastic resin | | CM1001 | CM1001 | CM1001 | CM1001 | CM1001 |
| | additive | | none | none | none | none | none |
| | thickness | [mm] | 2.0 | 2.0 | 2.0 | 2.0 | 2.0 |

(continued)

| | Examples | | 7 | 8 | 9 | 10 | 11 |
|---|---|---|---|---|---|---|---|
| Skin layer | reinforcing fiber | | glass fiber non-woven fabric (1) | glass fiber non-woven fabric (1) | glass fiber non-woven fabric (1) | glass fiber non-woven fabric (3) | glass fiber non-woven fabric (1) |
| | reinforcing fiber cut length | [mm] | 15 | 15 | 15 | 15 | 15 |
| | presence or absence of bundles each having bundle width of 150 $\mu$m or more | | absent | absent | absent | absent | absent |
| | number of bundles each having bundle width of 150 $\mu$m or more | | ○ (good) | ○ (good) | ○ (good) | ○ (good) | ○ (good) |
| | thermoplastic resin | | CM1001 | CM1001 | CM1001 | CM1001 | CM1001 |
| | additive | | CB | none | none | none | none |
| | thickness | [$\mu$m] | 100 | 100 | 100 | 29 | 1200 |

[Table 1-4]

| | Examples | | 7 | 8 | 9 | 10 | 11 |
|---|---|---|---|---|---|---|---|
| Properties of stampable sheet | Vf of carbon fibers | [%] | 28 | 28 | 28 | 29 | 17 |
| | Vf of reinforcing fibers | [%] | 0.6 | 0.6 | 0.6 | 0.3 | 4.4 |
| | evaluation of surface appearance | | ○ (good) | ○ (good) | ○ (good) | Δ (acceptable) | ○ (good) |
| | color of surface (L value) | | 20 | 32 | 32 | 30 | 33 |
| | fluidability | [%] | 300 | 260 | 238 | 338 | 400 |
| | bending strength JIS-K7171 | [MPa] | 460 | 470 | 467 | 438 | 360 |
| | CV value | | ○ (good) | ○ (good) | ○ (good) | ○ (good) | ○ (good) |
| | pattern transfer performance | | ○ (good) | ○ (good) | ○ (good) | ○ (good) | ○ (good) |
| | evaluation of surface appearance of pattern-transferred surface | | ○ (good) | ○ (good) | ○ (good) | Δ (acceptable) | ○ (good) |

[Table 2-1]

| | | | Comparative Examples | 1 | 2 | 3 | 4 | 5 | 6 |
|---|---|---|---|---|---|---|---|---|---|
| Core layer | carbon fiber | | | (1) | (1) | (1) | (1) | (1) | (1) |
| | carbon fiber cut length | [mm] | | 10 | 10 | 15 | 10 | 10 | 10 |
| | number of bundles each having bundle width of 150 μm or more | | | ○ (good) | X (bad) | X (bad) | ○ (good) | ○ (good) | ○ (good) |
| | number of bundles each having bundle width of more than 5 mm | | | ○ (good) | ○ (good) | ○ (good) | ○ (good) | ○ (good) | X (bad) |
| | average bundle width of carbon fiber bundles (A) | [μm] | | 160 | 110 | - | 160 | 160 | 7000 |
| | proportion of carbon fiber bundles (B) | [%] | | 43 | 5 | 0 | 43 | 43 | 100 |
| | x: average value of number of bundle-constituting fibers | [fibers] | | 380 | 120 | - | 380 | 380 | 12000 |
| | σ: standard deviation | | | 230 | 30 | - | 230 | 230 | - |
| | thermoplastic resin | | | CM1001 | CM1001 | CM1001 | CM1001 | CM1001 | CM1001 |
| | additive | | | none | none | none | none | none | none |
| | thickness | [mm] | | 2.0 | 2.0 | 2.0 | 2.0 | 2.0 | 2.0 |
| Skin layer | reinforcing fiber | | | glass fiber non-woven fabric (2) | glass fiber non-woven fabric (1) | - | - | - | glass fiber non-woven fabric (1) |
| | reinforcing fiber cut length | [mm] | | 6 | 15 | - | - | - | 15 |
| | presence or absence of bundles each having bundle width of 150 μm or more | | | present | assent | - | - | - | absent |
| | number of bundles each having bundle width of 150 μm or more | | | X (bad) | ○ (good) | - | - | - | ○ (good) |
| | thermoplastic resin | | | CM1001 | CM1001 | - | - | CM1001 | CM1001 |
| | additive | | | none | none | - | - | CB | none |
| | thickness | [μm] | | 100 | 100 | - | - | 88 | 100 |

[Table 2-2]

| | Comparative Examples | | 1 | 2 | 3 | 4 | 5 | 6 |
|---|---|---|---|---|---|---|---|---|
| Properties of stampable sheet | Vf of carbon fibers | [%] | 28 | 28 | 30 | 30 | 29 | 28 |
| | Vf of reinforcing fibers | [%] | 0.6 | 0.6 | - | - | - | 0.8 |
| | Evaluation of surface appearance | | X (bad) | ○ (good) | ○ (good) | X (bad) | X (bad) | X (bad) |
| | color of surface (L value) | | 33 | 32 | 27 | 28 | 25 | 32 |
| | fluidability | [%] | 320 | 160 | 150 | 300 | 310 | 350 |
| | bending strength JIS-K7171 | [MPa] | 445 | 460 | 480 | 465 | 465 | 320 |
| | CV value | | X (bad) | ○ (good) | ○ (good) | ○ (good) | ○ (good) | X (bad) |
| | pattern transfer performance | | X (bad) | ○ (good) | ○ (good) | ○ (good) | ○ (good) | X (bad) |
| | evaluation of surface appearance of pattern-transferred surface | | X (bad) | ○ (good) | ○ (good) | X (bad) | X (bad) | X (bad) |

In the tables, the carbon fiber cut length corresponds to the number average fiber length of carbon fibers, and the reinforcing fiber cut length corresponds to the number average fiber length of reinforcing fibers.

INDUSTRIAL APPLICABILITY

The stampable sheet according to the present invention can be used in the production of all of carbon fiber-reinforced molded articles for which the achievement of both of high fluidity and mechanical properties and a small level of variations in the mechanical properties, which cannot be achieved by the conventional techniques, are required.

DESCRIPTION OF REFERENCE SIGNS

1: Carding device
2: Cylinder roll
3: Take-in roll
4: Doffer roll
5: Worker roll
6: Stripper roll
7: Feed roll
8: Belt conveyor
9: Discontinuous carbon fiber
10: Sheet-like web
11: Air-laying device
12: Drum
13: Pin cylinder
14: Wire
15: Suction box
16: Chopped carbon fiber
17: Mixer
18: Dispersion solution
19: Dispersing tank

20: Pressurized air tube
21: Opening cock
22: Paper-making tank
23: Paper-making surface
24: mesh conveyor (equipped with mesh sheet for draining water)
25: Web
26: Binder transport section
27: Opening cock
28: Pressurized air tube
29: Binder tank
30: Conveyor
31: Dryer
41: Endpoint of discontinuous carbon fiber bundle
42: Midpoint of discontinuous carbon fiber bundle

**Claims**

1.  A stampable sheet comprising a skin layer and a core layer, wherein the core layer comprises a carbon fiber non-woven fabric sheet having fiber bundles of discontinuous carbon fibers and a thermoplastic resin, the carbon fiber non-woven fabric sheet contains at least five or more fiber bundles (A) each having a bundle width of 150 $\mu$m or more per a 100 mm square of the stampable sheet and also contains less than five fiber bundles each having a bundle width of more than 5 mm per the above-mentioned 100 mm square, and the skin layer comprises a reinforcing fiber non-woven fabric sheet having spread discontinuous reinforcing fibers and a thermoplastic resin.

2.  The stampable sheet according to claim 1, wherein the reinforcing fiber non-woven fabric sheet contains less than five fiber bundles each having a bundle width of 150 $\mu$m or more per a 100 mm square of the stampable sheet.

3.  The stampable sheet according to claim 1 or 2, wherein the carbon fiber non-woven fabric sheet that constitutes the core layer contains fiber bundles (B) of the discontinuous carbon fibers in which the number $x_n$ of fibers calculated in accordance with the formula shown below is 100 or more, and the content of the fiber bundles (B) is more than 5 wt% relative to the total weight of carbon fibers that constitute the carbon fiber non-woven fabric sheet:

$$x_n = Mn/(Ln \times F)$$

wherein Mn represents the weight of a carbon fiber bundle, Ln represents the length of a carbon fiber bundle, and F represents the fineness of a carbon fiber.

4.  The stampable sheet according to any one of claims 1 to 3, wherein, with respect to the single fiber bending stiffness of reinforcing fibers that constitute the skin layer and the single fiber bending stiffness of carbon fibers that constitute the core layer, the value of the (single fiber bending stiffness of the reinforcing fibers)/(single fiber bending stiffness of the carbon fibers) ratio is 1 or more and less than 20.

5.  The stampable sheet according to any one of claims 1 to 4, wherein, with respect to the heat conductivity of the reinforcing fibers that constitute the skin layer and the heat conductivity of the carbon fibers that constitute the core layer, the value of the (heat conductivity of the reinforcing fibers)/(heat conductivity of the carbon fibers) ratio is more than 0.01 and 1 or less.

6.  The stampable sheet according to any one of claims 1 to 5, wherein the value represented by formula (1) shown below is 0.1 or more and 10 or less:

```
(thickness (µm) of the skin layer)/(average bundle width (µm)

of the carbon fiber bundles (A) in the core layer) (1).
```

7. The stampable sheet according to any one of claims 1 to 6, wherein the reinforcing fibers in the skin layer have a number average fiber length of 3 to 50 mm.

8. The stampable sheet according to any one of claims 1 to 7, wherein the reinforcing fibers in the skin layer are glass fibers.

9. The stampable sheet according to any one of claims 1 to 8, wherein the skin layer contains a black inorganic filler.

10. The stampable sheet according to any one of claims 1 to 9, wherein the carbon fiber non-woven fabric sheet that constitutes the core layer contains fiber bundles (B) of the discontinuous carbon fibers in which the number $x_n$ of fibers calculated in accordance with the formula shown below is 100 or more, and the content of the fiber bundles (B) is 20 to 90 wt% relative to the total weight of carbon fibers that constitute the carbon fiber non-woven fabric sheet:

$$x_n = Mn/(Ln \times F)$$

wherein Mn represents the weight of a carbon fiber bundle, Ln represents the length of a carbon fiber bundle, and F represents the fineness of a carbon fiber.

11. The stampable sheet according to claim 10, wherein the average value x of the numbers of the fiber bundle-constituting fibers of the individual carbon fiber bundles (B) that constitute the carbon fiber non-woven fabric sheet in the core layer is 100 to 900.

12. The stampable sheet according to claim 10 or 11, wherein the standard deviation $\sigma$ of the numbers of the fiber bundle-constituting fibers of the individual carbon fiber bundles (B) falls within the range from 100 to 500.

13. The stampable sheet according to any one of claims 1 to 12, wherein the volume fraction (Vf) of the carbon fibers in the core layer is 5 to 50 vol%.

14. The stampable sheet according to any one of claims 1 to 13, wherein the number average fiber length of the carbon fibers in the carbon fiber non-woven fabric sheet that constitutes the core layer is 3 to 25 mm.

15. A molded article produced using a stampable sheet as recited in any one of claims 1 to 14.

[Fig 1]

[Fig 1]

[Fig 2]

[Fig 2]

[Fig 3]

[Fig 3]

[Fig 4]

[Fig 4]

**EP 3 095 807 A1**

## INTERNATIONAL SEARCH REPORT

International application No.

PCT/JP2015/050607

**A. CLASSIFICATION OF SUBJECT MATTER**
*C08J5/04*(2006.01)i, *D04H1/4242*(2012.01)i

According to International Patent Classification (IPC) or to both national classification and IPC

**B. FIELDS SEARCHED**

Minimum documentation searched (classification system followed by classification symbols)
C08J5/04, D04H1/4242, B32B1/00-43/00

Documentation searched other than minimum documentation to the extent that such documents are included in the fields searched
Jitsuyo Shinan Koho          1922-1996     Jitsuyo Shinan Toroku Koho     1996-2015
Kokai Jitsuyo Shinan Koho    1971-2015     Toroku Jitsuyo Shinan Koho     1994-2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2013/118689 A1 (Toray Industries, Inc.), 15 August 2013 (15.08.2013), entire text; all drawings & US 2015/0005434 A1 & EP 2813532 A1 & CN 104093771 A & KR 10-2014-0126307 A | 1-15 |
| A | WO 2012/086682 A1 (Toray Industries, Inc.), 28 June 2012 (28.06.2012), entire text; all drawings & US 2013/0192434 A1 & EP 2642007 A1 & CN 103119209 A & KR 10-2013-0139857 A | 1-15 |
| A | JP 2011-178890 A (Teijin Ltd.), 15 September 2011 (15.09.2011), entire text; all drawings (Family: none) | 1-15 |

[X] Further documents are listed in the continuation of Box C.  [ ] See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 March 2015 (27.03.15) | 07 April 2015 (07.04.15) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (July 2009)

**INTERNATIONAL SEARCH REPORT**

International application No.

PCT/JP2015/050607

C (Continuation). DOCUMENTS CONSIDERED TO BE RELEVANT

| Category* | Citation of document, with indication, where appropriate, of the relevant passages | Relevant to claim No. |
|---|---|---|
| A | JP 2005-271350 A (Toray Industries, Inc.), 06 October 2005 (06.10.2005), entire text (Family: none) | 1-15 |
| A | US 6503856 B1 (Andrew Broadway), 07 January 2003 (07.01.2003), entire text; all drawings (Family: none) | 1-15 |
| E,A | JP 5687812 B1 (Teijin Ltd.), 25 March 2015 (25.03.2015), entire text (Family: none) | 1-15 |
| P,A | WO 2014/081002 A1 (Mitsubishi Rayon Co., Ltd.), 30 May 2014 (30.05.2014), entire text & TW 201434902 A | 1-15 |
| E,A | WO 2015/023000 A1 (Teijin Ltd.), 19 February 2015 (19.02.2015), entire text (Family: none) | 1-15 |

Form PCT/ISA/210 (continuation of second sheet) (July 2009)

**INTERNATIONAL SEARCH REPORT**

| International application No. |
| --- |
| PCT/JP2015/050607 |

Claims 3 and 10:

Claims 3, 10 state that "the number $(X_n)$ of fibers is 100 or more", and do not specify what kind of fibers they are. Further, the claims state "$X_n=M_n/(L_n\times F)$ where $M_n$ is the weight of a carbon fiber bundle, $L_n$ is the length of the carbon fiber bundle, and F is the fineness of a carbon fiber", and do not specify the unit system of each parameter.

Generally, fibers exist in a wide variety of forms. Therefore, it is a matter that can be considered as common technical knowledge that the number of fibers changes according to the form of the fibers used, and the value of a fiber also changes according to the form of the fiber.

Further, it is a matter of course that the coefficients of the expression change according to the unit systems adopted.

From paragraphs [0033] and the like, disclosed in the description in the meaning of PCT Article 5 is only a statement that this "number of fibers" is "the number of single yarns", and F is the fineness of the single yarn, and therefore, in the meaning of PCT Article 6, the claims lack sufficient support.

Therefore, the search was conducted on a portion disclosed in and supported by the description, that is, on the case where "the number of fibers" shows "the number of single yarns", F shows the fineness of the single yarn, and the unit systems of weight, length, and fineness that are suitable to find the number of single yarns are used as the unit systems of $M_n$, $L_N$, and F in the expression.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011178890 A
- WO 2013118689 A
- JP 2010235779 A